# EUROPEAN PATENT SPECIFICATION

(11) **EP 1 478 134 B1**
(45) Date of publication and mention of the grant of the patent: **14.02.2007**
(21) Application number: 03291145.5
(22) Date of filing: 16.05.2003
(51) Int. Cl.: H04L 12/56, H04L 29/06, H04L 12/24

(54) **Method and apparatus for operating group services in communication networks**
Verfahren und Vorrichtung zum Betrieb eines Gruppendienstes in Kommunikationsnetzen
Procédé et dispositif pour faire fonctionner services collectifs dans des réseaux de communication

(43) Date of publication of application: 17.11.2004
(73) Proprietor: Hitachi, Ltd., Tokyo 100-8280 (JP)
(72) Inventor: Hayashi, Masato, 06400 Cannes (FR); Bonnet, Christian, 06560 Valbonne (FR)
(74) Representative: Beetz & Partner

(56) References cited:
- MASATO HAYASHI, CHRISTIAN BONNET: "A study on characteristics of ad hoc network applications" PROCEEDINGS OF THE IASTED INTERNATIONAL CONFERENCE COMMUNICATIONS SYSTEMS AND NETWORKS, 9 - 12 September 2002, pages 13-18, XP002257154
- ERIK WILDE: "Specification of GMS Access Protocol (GAP) Version 1.0" COMPUTER ENGINEERING AND NETWORKS LABORATORY (TIK), SWISS FEDERAL INSTITUTE OF TECHNOLOGY (ETH ZÜRICH), [Online] XP002257155 Retrieved from the Internet: <URL:http://citeseer.nj.nec.com/410512.htm l> [retrieved on 2003-10-09]
- FENNER W: "RFC 2236.Internet Group Management Protocol, Version 2" IETF INTERNET ENGINEERING TASK FORCE, 30 November 1997 (1997-11-30), XP002230720 Retrieved from the Internet: <URL:http://www.faqs.org/ftp/rfc/pdf/rfc22 36.txt.pdf> [retrieved on 2003-02-11]
- MMUSIC WG: HANDLEY ET AL: "draft-ietf-sip-rfc2543bis-00.ps - SIP: Session Initiation Protocol" INTERNET ENGINEERING TASK FORCE, XX, XX, 5 June 2000 (2000-06-05), pages 1-129, XP002164649
- HANDLEY M ET AL: "SDP: Session Description Protocol" IETF INTERNET ENGINEERING TASK FORCE, April 1998 (1998-04), XP002101463 Retrieved from the Internet: <URL:http://www.cis.ohio-state-edu/htbin/r fc/rfc2327.html> [retrieved on 1999-04-28]
- HANDLEY M.; PERKINS C.; WHELAN E.: 'Session Announcement Protocol (RFC 2974)', [Online] October 2000, XP002187917 Retrieved from the Internet: <URL:ftp://ftp.isi.edu/in-notes/rfc2974.txt > [retrieved on 2002-01-21]
- DIEHL ET AL: 'System integration for mobile computing and service mobility' DISTRIBUTED PLATFORMS March 1996, LONDON, pages 44 - 56

## Description

The present invention relates to a method and an apparatus for operating group services in communication networks comprising a plurality of network nodes.

At present, the internet becomes a more and more powerful and popular communication medium. It allows a variety of applications to be deployed in the network. For example, in a content delivery network (CDN) content information is delivered to users who have registered with the CDN system. Accordingly, by registration, the users become members of a service group, and, for instance, news are delivered to their terminals. Other services based on a group concept are mailing lists, video / audio streaming and other applications using the IP (Internet Protocol) multicast protocol. In any case, these groups only support registration and un-registration of users for a single application.

With recent performance advancements in wireless communication technologies, there is an ongoing development of extending mobility into the realm of autonomous, mobile, wireless domains. The goal of mobile ad hoc-networking is to support robust and efficient operation in mobile wireless networks by incorporating routing functionality into mobile nodes. In this case, a set of nodes themselves form the network routing infrastructure in an ad hoc fashion. The nodes usually are each a combination of a router and a host.

This mobile ad hoc network (MANET) is an autonomous system of mobile platforms (e.g., a router with one or multiple hosts and at least one wireless communication device - in the following simply referred to as network node or terminal) which are free to move and organize themselves so as to provide a flexible network topology. The network may operate in isolation, or may be connected to other networks, e.g. by gateways. Further information regarding ad hoc networks is available, e.g. in RFC 2501 of the Internet Engineering Taskforce (IETF).

MANET nodes are usually equipped with wireless transmitters and receivers. Depending on the nodes' positions and their transmitter and receiver coverage patterns, a wireless connectivity in the form of a random, multi-hop graph for the ad hoc network emerges. This ad hoc topology may vary with time as the nodes change their positions and/or are activated or deactivated.

Mobile ad hoc networks have many different applications. In one example, a rapidly deployable communication network with survivable, efficient dynamic networking is provided for fire/safety/rescue operations. In another example, a so-called "personal" local network may be established by a MANET to enable the communication of devices, such as mobile telephone handsets, handheld communicators, laptop computers, etc., owned and used by the same user. In addition, a mobile ad hoc network may be used to employ a so-called "face-to-face" local network connecting a plurality of nodes which are locally present in the same area, e.g. a room or building. This "face-to-face" network may be used for communication and/or data exchange of the respective users of the network nodes, e.g. in meetings, presentations, gaming applications or tour guide systems.

Application services are usually delivered using a group paradigm. In any application which creates a temporarily communication between a plurality of network nodes, it is necessary to establish and maintain the memberships of network nodes in application groups. In existing systems, e.g. a CDN, the group management is performed on the basis of pre-registration. However, these systems do not consider mobile network devices which may move rapidly and require frequent group membership changes. Because the known group management is based on a static pre-registration paradigm, new members cannot easily join a group serving an application whenever and wherever they want. In addition, the current group management does not consider terminal mobility. Thus, it does not provide methods for frequent changes in node location and accessibility. Accordingly, the known group registration methods are not suitable for communication networks which are dynamic in space and time, like mobile ad hoc networks. Similar problems relating to frequent group membership changes may also arise in other communication networks such as infrastructure based networks, e.g. the internet, GSM- or UMTS-networks.

In "A Study on Characteristics of Ad Hoc Network Applications" of Masato Hayashi and Christian Bonnet in "Proceedings of the IASTED International Conference on Communication Systems and Networks", September 9-12, 2002, pages 13-18, basics of the operation of group services in a communication network are disclosed. An architecture for ad hoc network communication comprising workgroup control and session control functions for an application is proposed. The proposed architecture has a direct relation between application, workgroup, and session, and allows a single session per work-group/application. The operation of a second application in the network requires the setup of a second workgroup and its corresponding session.

Document XP002164649, Session Initiation Protocol, specifies an Internet session Initiation Protocol for creating, modifying and terminating sessions with one or more participants. SIP can invite parties to both unicast and multicast sessions. The document gives the Internet Multicast architecture as an example for enabling a Multicast Conference.

It is the object of the present ivention to provide a method and an apparatus for operating group services in a mobile ad-hoc network which are adapted for dynamic and efficient operation.

The above object is achieved and the invention is defined by the appended independent claims 1, 22, 36, 37.

According to the present specification, in a method of operating group services in communication networks, a group control process to control the membership of network nodes in a service group and a session control process to control the connection status of one or more sessions within the service group are performed.

A service group is a temporarily formed group of network nodes (terminals), such as mobile telephone terminals, handheld computers, laptop computers, game consoles, printers, television sets, music players, and/or digital cameras, which logically assemble for communication purposes. A network node is preferably a mobile or stationary device having routing capabilities and comprising one or more hosts for operating service applications. The network nodes of one group may, for instance, belong to one user and form a "personal" network of the user. The network nodes of a service group may also be physically present in a certain location to form a "face-to-face" local network. The membership of network nodes in a service group is controlled by the group control process in order to allow nodes to join or leave the service group.

Within the service group a plurality of sessions may be established. Each session corresponds to a respective application transferring application data to network nodes within the service group. For every application a respective session is initiated and maintained by the session control process. For instance, a session for a video streaming application, a session for a voice streaming application, and a session for a document data exchange application may be established for a meeting service. The session control process controls the connection status of the sessions, e.g. the activation status (ON/OFF), the quality of service for the session, the connectivity, and/or the break status of the session.

By separating group control and session control, several related applications can establish respective independent sessions for data communication within the service group, wherein the plurality of sessions can share the same group control process. This makes group and session management very efficient. The group control process maintains the group membership of network nodes in the service group for all associated sessions. It can deal with frequent membership and location changes. The session control process can independently deal with frequent changes in the session connection status without stressing the group control. Accordingly, the method of operating group services in communication networks according to the present specification is suitable for highly dynamic service groups which may appear, e.g. in mobile ad hoc networks. The present specification allows that, when people with mobile computing devices meet together temporarily for certain purposes, these people can communicate by using a plurality of application services established dynamically corresponding to the requirements on the scene.

The group control process may comprise the definition of a service group by a group manager. The definition of a service group may be based upon group attributes, in particular a group name, a group identifier, a group manager identifier and/or group member identifiers. A network node which intends to start a service may become a group manager and perform the group control process to control the memberships of other nodes in the service group.

Preferably, a sending terminal which intends to transmit application data to other group members initiates a respective session and becomes a session manager. However, the session manager for a session may later be transferred to another network node. Other group members than the group manager may initiate sessions and become session managers for the respective sessions. By separating group control and session control it is possible to reduce the load imposed on network nodes acting as group manager or session manager.

The group control may further comprise the detection of an existing service group having predetermined required group attributes. Instead of opening up a new service group, a network node may check the communication network to find out, if a service group having the required group attributes, e.g. having particular group members, already exists (service group discovery). In this case, there is no need for the network node to establish a new group. The node may instead join the existing group and establish a session to transfer the application data to other group members within the existing group.

The group control process performed by a group manager which recently initiated a service group may comprise the sending of a group invitation to other network nodes. The sending of group invitations is preferably performed periodically to invite new nodes which recently joined the network or moved into the operation area of the service group. This is the (spatial) area of the communication network which is served by the service group, i.e. the area covered by group messages such as the group invitations and/ or the data transmissions of the sessions.

The group control process may further comprise the discovering of a group invitation received from a group manager (service group discovery). In the case that the group attributes received with the group invitation meet certain conditions given by the network node, and/or the user of the node decides to join the service group, a group registration request may be sent to the group manager. With this group registration request, the node requests to be registered as a group member for the respective service group. A node may belong to more than one service group.

Based upon a group registration request received from a node, the group manager may register the respective node sending the request as a group member. Before the registration, it is possible to verify that the node requesting registration meets predetermined criteria. In particular, it is suitable to verify whether the node is authorized to register with the group. It is also possible to ask the user of the group manager terminal for permission to register a particular group member.

The group control process may also comprise the generation of group control information including group attributes such as a security level and/or a required quality of service. The group manager preferably sends group control information to the group members, which may accept or deny the transmitted group attributes by sending group attribute acceptance messages. By means of this negotiation of group attributes, it is possible to complete or amend the service group definition, if necessary. For example, a different level of security may be negotiated by the group manager and a group member for an existing service group.

The group control process may further comprise the generation of a group certificate which can be used in the communication between the group manager and the group members to identify the group and/or to authenticate a group member. The group certificate is preferably unique and may include group attributes such as the group ID.

The group manager may further send group confirmation requests to group members. Group members, which are active and present in the group operation area and which have received a group confirmation request of a group they have joined before, respond to received group confirmation requests by sending group confirmation responses to the group manager. Based upon a received group confirmation response from a group member, the group manager may activate the registration of the group member. This has the advantage that the presence of group members, which have registered before to the group, is confirmed prior to the transmission of application data. The registrations of group members, which have registered to the group, but which do not send group confirmation responses to the group manager, are not activated. These group members may not receive application data. The operation of group services based upon group confirmation requests/responses is particularly useful for an off-spot scenario. In this scenario the place and time where the registration of group members is performed are different from the place and time of the transmission of application data by the respective session.

The group control process may further comprise the monitoring of group members by sending group monitoring requests to registered group members and by monitoring responses from the group members. This has the advantage of performing an ongoing monitoring of the actual presence of group members during the operation of the service group. Only group member terminals which are active and located within the operation range of the group manager may respond to a group monitoring request. Group members which do not meet these conditions may easily be detected by the group manager. The group manager may perform appropriate actions responsive to the detection of a group member which is not responding to group monitoring requests.

The monitoring of group members is preferably performed by periodically sending separate group monitoring requests to individual group members. For instance, a group monitoring request may be sent periodically as a unicast message to an individual network node after a predetermined timer has expired. A group member may be judged as a missing group member, if no response has been received from the group member for a predetermined time. Preferably, a group member is judged as a missing member, if no response has been received from the respective group member for a predetermined number of consecutive group monitoring requests sent to this network node. Thus, a group member which is not responding to a single group monitoring request is not already declared a missing group member, which is advantageous, because it is possible that the monitoring request and/or the monitoring response has been lost due to a network congestion while the group member is active and present.

The group manager may also send a single group monitoring request to all group members by multicast. The group monitoring request may be transmitted as a multicast message and delivered to all nodes of a (IP) multicast group. Preferably, the multicast group corresponds to the service group. Thus, it is possible to multicast the monitoring request to all group member terminals. As already described, group members receiving a group monitoring request send group monitoring responses to the group manager. In order to avoid a network congestion, it is suitable to send the monitoring responses after a random delay time has expired subsequent to the reception of the multicast group monitoring requests. The group manager may judge a group member to be a missing group member, if no response has been received from the group member after a predetermined time period has expired subsequent to the transmission of a group monitoring request.

According to another aspect of the specification, the group control may further comprise the step of searching a missing group member. In order to search a missing group member, a search request may be transmitted to all accessible terminals. In a mobile ad hoc network the search request may be sent to all network nodes in the neighborhood of the group manager. It is particularly useful to broadcast the search request for the missing group member to all nodes which are located within the radio range of the group manager. The search request may have a lifetime parameter which is included in a field of the search request and transmitted with the same. Network nodes within the mobile ad hoc network which receive the search request relay the received search request to other accessible network nodes. This has the advantage that the search area is extended, because network nodes which are not accessible by the group manager receive the relayed search request from intermediate relay nodes. Thus, the search request is distributed in the communication network using multiple hops (links between sending and receiving nodes). The coverage of the search area is controlled by the lifetime parameter of the search request, because nodes receiving the search request relay the received request to other nodes as long as the lifetime of the request is not expired. It is also possible to control the distribution area of the search request by determining a hop count of the search request. The hop count determines the number of times the search request is relayed by mobile terminals.

If no response from a missing member is received to a search request within a predetermined time period, further search requests may be sent. Preferably, the lifetime parameters of successive search requests are increased. This has the advantage that the search area for the missing member is successively increased, thus improving the possibility of detecting the missing group member.

The search for a missing group member may also be performed using multiply communication networks. This has the advantage that the missing group member may be detected even when the data transmission in one network is disturbed. In this case, the missing group member may possibly be contacted by a different communication network. In addition, communication networks having different network link transmission ranges may be used. For instance, in the beginning of the search, the search may be performed using a short distance radio link such as Bluetooth. If no response has been received, further search requests may then be transmitted using radio links having a larger range.

Preferably, a missing group member is judged to be a lost group member, if no response to one or more search requests for the group number has been received by the group manager. In this case, it is very likely that the missing network node has moved out of the operational area of the service group, or the node has been deactivated. In both cases, it is advisable to terminate the group membership of the lost group member. Group control information comprising the node IDs of participating group members may be updated to reflect the disappearance of the lost group member. It is suitable to notify the remaining group members about the status of the missing group member and/or the updated group control information. The updated group control information is preferably be distributed to the group members by multicast.

If a lost group member eventually receives a monitoring request or a search request from the group manager after having not received a request for a predetermined period of time, the node may decide that it has been disconnected from the group. This situation may appear, for instance, when the radio communication to the node is disturbed temporarily, which may happen, e.g., when a mobile node passes through a tunnel. The lost group member may then decide to send a rejoin request to the group manager in order to inform the group manager that the node is again connected to the group and requests to rejoin the group.

Upon receiving a rejoin request from a lost member, the group manager may update the group control information to include or reactivate the node ID of the lost group member. It is furthermore suitable to notify the group members about the updated group control information and the rejoining of the lost group member. With these actions, the node, which has before been considered lost, rejoins the service group, and from that time on, it may again participate in the group service, e.g. receive and/or send application data.

In order to leave the group, a group member may send a leave group request to the group manager. The group manager may update the group control information and notify the group members about the leaving and the updated group control information. This has the advantage that a group member gives a notice to the group manager relating to an intended departure from the group. In this case, the group manager will not start a search procedure for the respective group member.

According to the previously described group control process, a group manager is able to dynamically control the group membership of a plurality of network nodes and to monitor the presence of the group members. Missing members are automatically detected and a search procedure is initiated. The group membership information is adapted when a group member is lost. Accordingly, the specification provides a fully automatic and complete group control process which is performed by the group manager independently of the session control.

Based upon the above steps, the method according to the specification may perform a session control which is designed to efficiently control the connection status of a plurality of sessions within the service group. Because the session control is performed by a session manager separately from the group control, the computational load imposed on the individual network nodes is distributed and, hence, reduced. Furthermore, a plurality of sessions may share the same group control. Accordingly, the method of operating group services according to the present specification can deal with frequent group and session member changes. With the use of the group member searching procedure, the method can also handle frequent location changes of group members. In addition, the method according to the present specification can deal with frequent application/session connection status changes which are detected and handled independently by the respective session manager of the session.

The method of operating group services in communication networks according to the present specification is preferably implemented as a computer program to be operated by one or more of the network nodes. According to a preferred embodiment of the specification, the computer program is designed as a software protocol providing interfaces and messages to operate group services.

According to another aspect of the specification, an apparatus for operating group services in a communication network comprising a plurality of network nodes is provided. The apparatus comprises group control means to control the membership of nodes in a service group, and session control means to control the connection status for a plurality of sessions within the service group.

The group control means of a network node may comprise a group manager arranged to define a service group, to send group invitations to nodes and to register a group member based upon a group registration request received from the group member terminal.

The group manager may further comprise group monitoring means arranged to monitor the availability and accessibility of group members by sending group monitoring requests to group members and monitoring the responses from the group members.

The group manager may further comprise group member searching means arranged to send search requests for a missing group member to all accessible network nodes within a search area.

The group control means of a terminal may comprise group invitation detection means arranged to detect a group invitation which has been broadcast from a group manager. After a group invitation has been detected and the terminal decides to join the group, the group control means sends a group registration request to the group manager.

The group control means of a network node may further comprise group monitoring detection means arranged to detect group monitoring requests and search requests which have been broadcast from a group manager. After a group monitoring request or a search request has been received, the group control means sends a response to the group manager to confirm its presence.

The communication network is preferably arranged as a mobile ad hoc network. A mobile ad hoc network is an autonomous system of mobile nodes connected by wireless links. A mobile node may comprise a router and one or more hosts. The mobile nodes are free to move and organize themselves so as to provide a flexible network topology.

An apparatus according to the specification may comprise at least one network interface designed to communicate with other network nodes in the communication network. The network interface may be based on short range radio access technology such as Bluetooth, infrared data link (IrDA) and/or wireless local area network (WLAN). Of course, other networking technologies to connect the network nodes are also applicable, as is obvious to a person skilled in the art.

The network interface may be adapted to broadcast data or messages to a plurality of nodes and/or to multicast data or messages to a predetermined group of terminals. This preferably is achieved by using an internet protocol (IP) group address (IP multicast).

According to a preferred embodiment of the specification, the apparatus may comprise a plurality of network interfaces designed to communicate with network nodes via different communication networks. The group member searching means may send search requests for a missing group member via the different network interfaces. It is advantageous to use a network interface having a larger coverage (broadcast) area after no response has been received for a previous search request, which has been transmitted via a network interface having a smaller coverage (broadcast) area.

The nodes in the communication network are preferably mobile terminals which communicate by means of wireless communication links. In particular mobile phones, personal digital assistant (PDA), or wireless LAN nodes, such as notebooks, access points or workstations, are appropriate network nodes for operating group services. Also devices having a short range radio access network interface, in particular sensor chips or radio frequency identification (RFID) chips, may be employed as network nodes

Sensor chips detecting a physical entity and having a networking function, e.g. by using a radio technology, may also form an ad hoc network. In this case, the sensor chips may form a group using the group service according to the present specification. One sensor chip may have the role of a group manager and send information collected from other sensor chips acting as group members to a monitoring center. The information may be sent periodically or on demand.

RFID chips having a networking function may also form an ad hoc network and organize in groups. For instance, RFID chips may be utilized for identification of objects. RFID chips attached to vehicles can be used to store registration information of the vehicles. This information may be broadcast in the proximity of the vehicles via an ad hoc network. Accordingly, vehicles in the proximity may recognize the registration information of other vehicles in the area.

The present specification provides a method and an apparatus for operating group services in communication networks, wherein the group control and the session control are separated to improve flexibility and efficiency. The specification may be implemented by a person skilled in the art, e.g., in the form of a computer program for a network device which may be organized as a general purpose computer or special purpose hardware device. The specification may also be implemented by transferring the group service protocol to hardwired logics such as ASICs or other silicon chips.
Fig. 1 shows an example of a system configuration for illustrating the operation of group services in a communication network;
Fig. 2 briefly illustrates the procedure to operate a group service for a tentative meeting example;
Fig. 3 shows schematically the relation between group control and session control;
Fig. 4 shows schematically a communication network for operating group services;
Fig. 5 shows schematically the relation between different sessions within one group;
Fig. 6 shows schematically steps involved in operating the group services;
Fig. 7 shows a flow diagram illustrating schematically the main processing steps of the group control process performed by the group manager;
Fig. 8 shows a flow diagram illustrating schematically the decision process to become group manager;
Fig. 9 shows schematically details of the service group invitation and initial registration process;
Fig. 10 shows schematically the group confirmation process;
Fig. 11 shows a diagram explaining schematically a first method of monitoring group members;
Fig. 12 shows a diagram explaining schematically a second method of monitoring group members;
Fig. 13 shows schematically a successful search for a missing group member;
Fig. 14 further illustrates schematically the search for a missing group member;
Fig. 15 shows a flow diagram for an unsuccessful search process performed by the group manager;
Fig. 16 shows a flow diagram of a process to be performed in a network node;
Fig. 17 shows schematically a group maintenance process concerning group membership changes.
Fig. 18 shows schematically a group maintenance process concerning a group member leaving the group;
Fig. 19 shows schematically a group termination process;
Fig. 20 shows a flow diagram illustrating schematically the session control process;
Fig. 21 shows schematically a session invitation process performed by a terminal which wants to start transmitting application data;
Fig. 23 shows schematically a session confirmation process;
Fig. 24 shows schematically a first session monitoring process;
Fig. 25 shows schematically a second session monitoring process;
Fig. 26 shows schematically the main control flow of the session maintenance performed by the session manager;
Fig. 27 shows schematically a session break recovery process;
Fig. 28 shows schematically a session participation process;
Fig. 29 shows schematically a leave session process;
Fig. 30 shows schematically a group change process;
Fig. 31 shows schematically a session attribute update process;
Fig. 32 shows schematically a session termination process;
Fig. 33 shows a block diagram of the hardware structure of a network node 10 adapted to operate group services according to the present invention;
Fig. 34 shows the software structure of a preferred embodiment of the invention; and
Fig. 35 shows the relation between the software structure of a manager terminal and a client terminal.

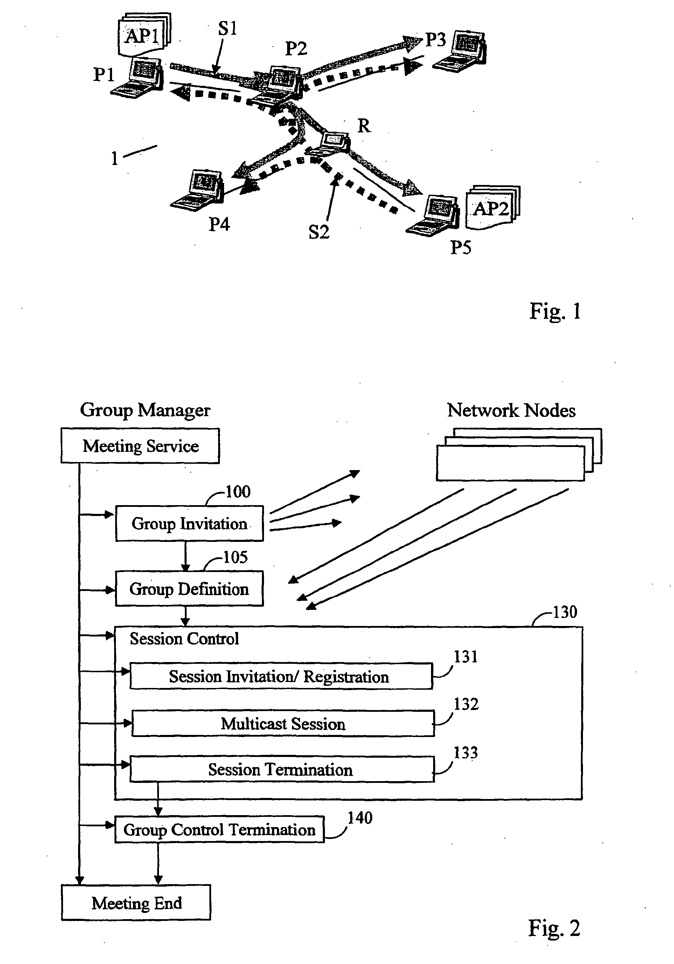

Fig. 1 shows an example of a system configuration for illustrating the operation of group services in a communication network 1. The mobile network nodes P1-P5 and the relay node R form a mobile ad hoc network 1 by using a wireless link communication technology. The mobile nodes P1-P5, R are autonomous host systems having routing capabilities.

The example shown in Fig. 1 relates to a tentative meeting story. Host P1 initiates a service group for the meeting and becomes the group manager (GM). Hosts P2-P5 join the group for the meeting. The relay node R is not participating in the service group but serves as a mediator or relay station in the mobile multihop wireless network 1. The group manager P1 performs the group control process to control the membership of the nodes P1-P5 in the service group and to track the members P1-P5.

An application AP1, which intends to send application data to the group members P2-P5, is performed on node P1. Node P1 is the first sender in the group and, therefore, initiates a session S1 for transferring the application data of AP1 to the group members P2-P5. Accordingly, P1 becomes session manager of the session S1 in order to perform the respective session control for S1. The session control is concerned with the control of the connection status of the session S1, i.e. the start/ stop of the application data transmission. The session control manages the application connection, e.g. by ordering data, monitoring the session quality (throughput, error rate, delay, etc.). The session manager may be changed over to another session member, if for instance another session member takes over the sending part in the session.

A second application AP2, which intends to transfer application data to the group members P1-P4, is performed on mobile terminal P5, which initiates a second session S2 and becomes session manager thereof. Within the service group a plurality of sessions may be initiated and maintained by the respective session managers. The sender of a session may be any node in the group. In the illustrated tentative meeting example, the first presentation application may show slides to the group members by means of the first session. The second application performed on P5 may show another presentation related to the topic by means of the second session S2. In another scenario, a video streaming application may use session S 1, and a voice-over-IP application may use session S2.

By separating group control and session control, the method of operating group services in a communication network according to the invention provides a large flexibility and reduces the computational load imposed on the individual network nodes performing as a group and/or session manager. It is possible to perform a plurality of sessions within the service group, thereby sharing the group control performed by the group manager.

In Fig. 2 the procedure to operate the group service for the tentative meeting example is briefly illustrated. Details of the individual steps will be explained later.

First, the chairman of the tentative meeting who is also the first sender initiates a service group and becomes group manager. In step 100 the group manager sends group invitations for the meeting to other network nodes, e.g. by broadcasting meeting invitation messages within the communication network. Interested network nodes may join the service group by responding to the group invitation. The group manager collects the group registration requests send by the interested nodes and registers the respective group members, thereby defining the service group in step 105. In step 130 the session control process is performed. The session control process may control a plurality of sessions corresponding to applications having data for transmission to session members. Here, a session invitation and registration process is performed in step 131. A multicast session for the meeting application is performed in step 132. Upon completion, the session is terminated in step 133. After the session is terminated, or if the group manager decides to close the service group, the group control is terminated in step 140, thereby ending the meeting service.

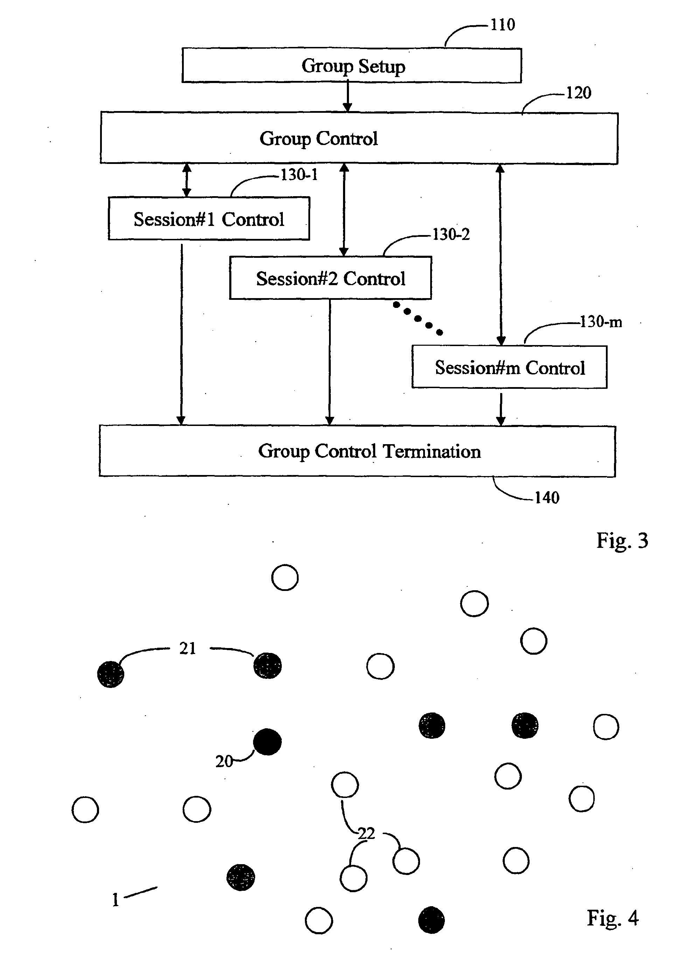

Fig. 3 shows schematically the relation between group control and session control. After a group setup has been performed in step 110, e.g. by sending a group invitation to network nodes and registering responding nodes, in step 120 the group control process is carried out by the group manager which can be the first sender or another member of the group. The group control takes care of member tracking and membership maintenance. For every session S1-Sm, a separate session control is performed in steps 130-1 to 130-m to manage the applications' connections. The session manager for a session is preferably the first application sender in the group. Therefore, a session appears upon a terminal with application data to be sent. A group can include several sessions S1-Sm corresponding to respective applications. For example, a first multicast session for a slide show and second multicast session for a video streaming application are performed. A group manager can concurrently be session manager. After all sessions are terminated by their respective session controls, or when the group manager decides to close the service group, the group control is terminated in step 140.

Fig. 4 shows schematically a communication network 1 for operating group services. The communication network 1 is a mobile ad hoc network composed of nodes 20-22 acting as host and relay nodes. A service provider terminal 20 (black circle) announces a service group, and interested nodes group with the service provider node 20 to become group members 21 (grey circles). The Group members 21 may be connected by direct network links (single hop) or indirectly via relay nodes 22 (multi hop). Relay nodes 22 (open circles) do not participate in the group but relay received data to other nodes.

Network nodes 20-22 may have more than one communication interfaces, for instance, one interface for operating an ad hoc network and another interface connected to an infrastructure based network, e.g. a cellular mobile network. A node with multiple network interfaces may also belong to different groups operating in different networks.

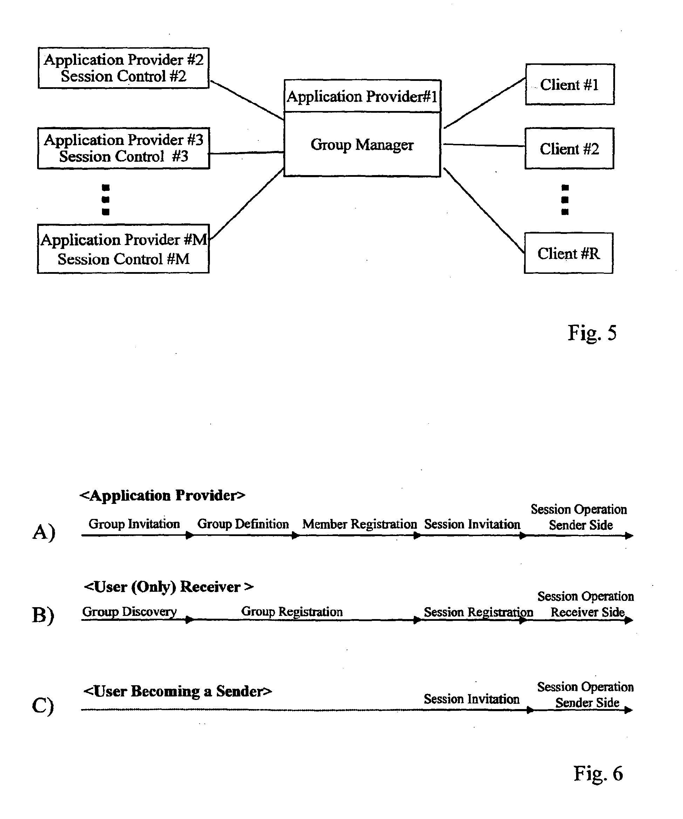

Fig. 5 shows schematically the relation between different sessions within one group. Application services are proposed to users/clients by application providers. An application provider advertises its application service, takes care of the user/ client registration and sends data. The first application provider (sender) usually initiates the group and takes the role of the group manager. All application providers (senders) become a group member by registering to the group manager. An application provider has the role of a sender in the system and becomes the session manager to perform the session control of its respective session. A client or user registers to the group manager in order to access the various application services within the group. After registration a client receives data from the application providers. Every group member can become an application provider. Each application provider within the group shares the group control performed by the group manager.

Fig. 6 shows schematically different steps involved in operating the group services. Fig. 6A illustrates the steps performed by the first application provider which sets up a service group and becomes group manager. First, a service group invitation (advertisement) is distributed in the communication network. Then, the group is formed and the group members are registered. Next, a session invitation for the first session is distributed to the group members. Finally, the sender side session operation for the first application is performed.

Fig. 6B shows the steps involved in the operation of a user (only) receiver. First, a service group meeting certain requirements is discovered and the client/user registers with this group. Then, a session registration is performed to register with an application service. Next, the receiver side session operation is carried out to receive application data corresponding to the registered session.

Fig. 6C shows the steps for a user/client becoming a sender. The user/client which is already registered as a group member decides to take the role of an application provider and intends to send data to other users/clients. Accordingly, the user/client distributes a session invitation to other group members and performs the sender side session operation to send data to other registered members.

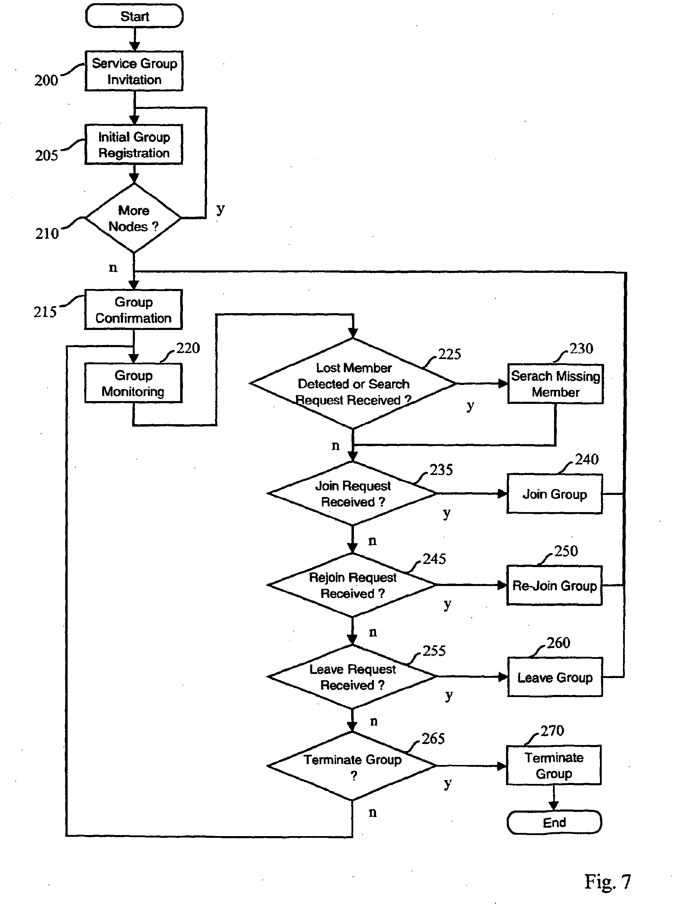

Fig. 7 shows a flow diagram illustrating the main processing steps of the group control performed by the group manager. Details of the individual steps will be described later.

In step 200 a service group invitation is transmitted to other network nodes in the communication network. The group invitation may comprise group attributes specifying the properties of the group.

In step 205 a network node registers with the group by sending a group registration request to the group manager. The initial group registration is repeated until in step 210 no more network nodes request a group registration or a predetermined registration time expires.

In step 215 the group manager sends a group confirmation request to the registered group members. The group members confirm their presence by responding to the group confirmation.

The monitoring of group members is performed in step 220 by sending monitoring requests to the group members and detecting the respective responses in order to track the status and presence of group members.

If in step 225 a lost group member is detected by the group monitoring process (or if a search request is received by the group manager), a search process for the missing group member is performed in step 230. In this search process, a search request for the missing group member is sent to all accessible network nodes in order to determine, if the missing member may be contacted. If the attempts to contact the missing member fail, the missing member is considered lost and its group membership is deactivated (temporally or permanently).

In step 235 it is determined, if a join request from a new network node, which is not already a group member, is received. In the affirmative, a join group process is performed in step 240 in order to allow the new node to join the group.

If in step 245 a rejoin request from a group member, which has before been considered lost, is received, a rejoin group process is performed in step 250 in order to reactivate group the membership of the lost group member.

In step 255 it is determined, if a leave request is received from a group member. In the affirmative, a leave group process is performed in step 260 in order to un-register the group member which has sent the leave request to the group manager.

In step 265 the group manager decides whether the service group should be terminated. If so, in step 270 the service group and the group control process are terminated. If in step 265 the group manager decides to continue the service group, e.g. because one or more sessions are still active, the process continues with step 220 by performing the group monitoring.

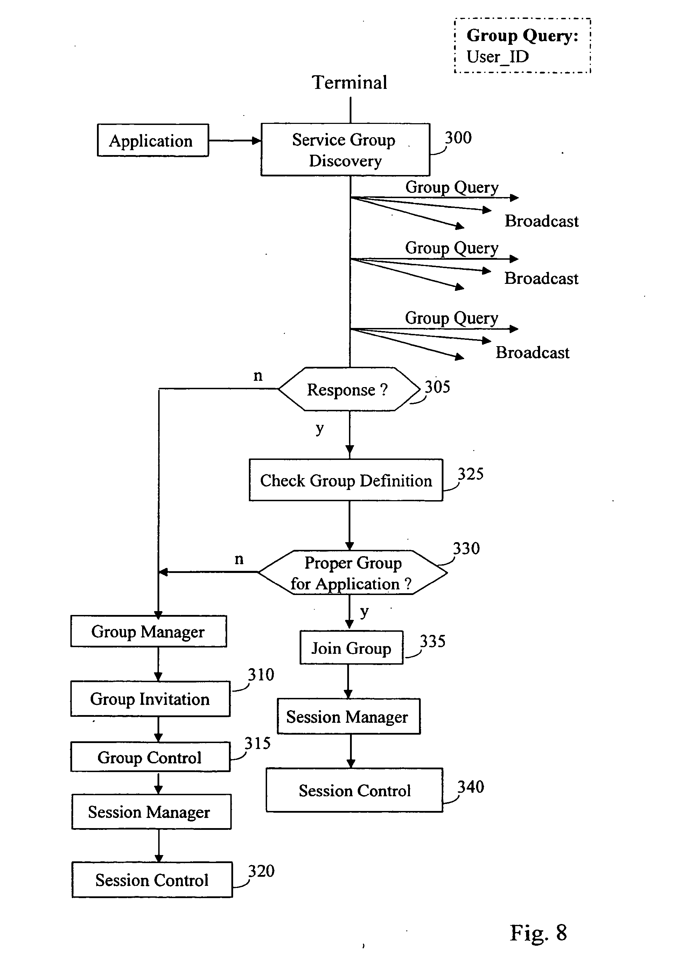

Fig. 8 shows a flow diagram illustrating the decision process of a terminal which has data to send without being any member of a group. The purpose of this service discovery process is to search an existing group for some service in a particular area of the communication network.

The process in the terminal is triggered by an application intending to send data, whereby the terminal becomes an application provider. When the terminal intends to start the application service, there are three possible cases for the terminal status: (1) the terminal is already a member of a suitable group; (2) the terminal is not a member of a suitable existing group but may join the group; or (3) a suitable service group for the application is not existing and the terminal needs to create a new group. The following process is needed for cases (2) and (3). It is not needed for case (1) and may be skipped.

In step 300 a service group discovery process is performed. A service group query is sent to other nodes in the communication network. For instance, the service group query is broadcast to all mobile terminals in an ad hoc mobile network. The purpose of the service group query is to determine the properties of existing groups, in particular the names of group members and/or group managers. A service group query message may comprise identification information of the user operating the terminal (User_ID). The service group query may be repeated by a given number.

In step 305 it is determined, if a response to one of the service group queries is received by the terminal. If no response is received, it is decided that no service group exists in an area of the network which is covered by the group queries. In this case, the terminal with sending data starts a new group and becomes group manager.

In step 310 the terminal performs a service group invitation to invite other nodes to join the service group. The group control for the new service group is performed in step 315. In order to send application data to other group members, the terminal sets up a new session and becomes session manager. The session control for the session is performed in step 320.

If in step 305 a response to the service group query is received, the terminal checks in step 325, if the group attributes of the existing group match the requirements of the application. For example, the names of the group members are compared to a list of terminal or terminal user names required by the application.

In step 330 it is determined, if the detected group is a proper group for the application. If the group attributes do not match the application requirements, the terminal decides to start a new group and becomes a group manager. In this case, the process is continued with step 310.

If the detected group is an appropriate group for the application, the terminal joins the detected group in step 335. In order to send application data, the terminal initiates a session, becomes a session manager, and performs the session control in step 340.

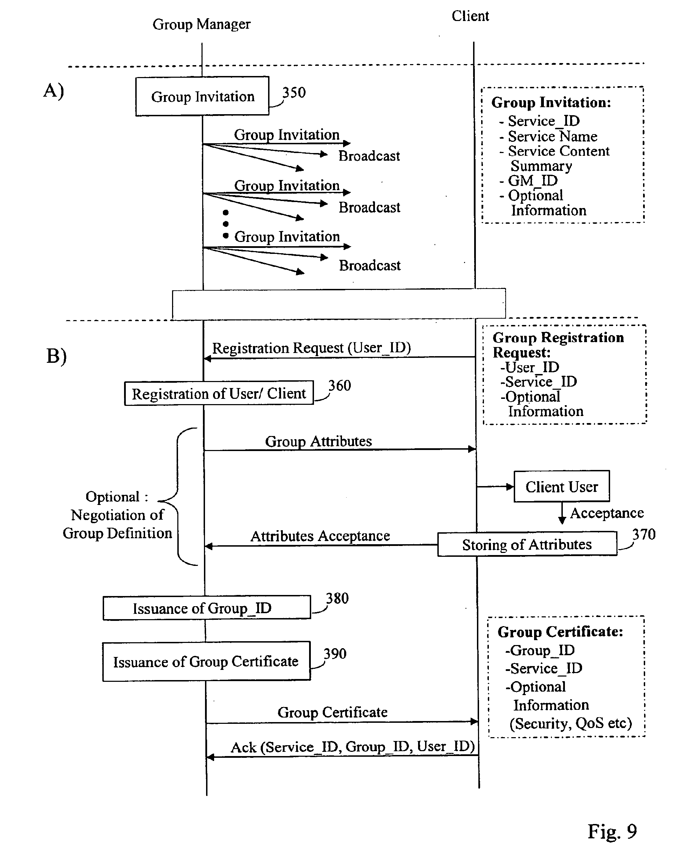

Fig. 9 shows schematically details of the service group invitation and the initial registration of group members. In step 350 the service group invitation is carried out by the group manager. The group manager sends group invitations to network nodes. The group invitation is preferably sent by broadcast and may be repeated by a given number. A service group invitation may comprise the service ID, the service name, a service contents' summary, the group manager ID (GM_ID), and/or additional optional information.

As an optional measure, a node receiving a group invitation (client) may ask the user operating the client whether he accepts the group invitation or not. In case the user decides to accept the group invitation, the client responds to the group invitation by sending a group registration request to the group manager. A registration request message may comprise the user ID, the client ID, the service ID of the accepted service group, and/or additional optional information.

After the registration request has been received by the group manager, the registration of the user/ client is performed in step 360.

This initial registration process may be repeated for other network nodes during an initial registration period which is determined by the group manager. During this initial registration period, a plurality of interested clients may register for the service group. It is also possible to limit the number of group members, if necessary.

As an optional measure, a negotiation of service group attributes may be performed by the group manager and the group member/group members. For this purpose, group attributes, such as the required security and/or quality of service (QoS), are transferred to the client(s). The client(s)/user(s) may accept and store the received group attributes in step 370. To control the acceptance of the group attributes, the client(s) may send an attribute acceptance message to the group manager.

After the initial registration of group members, the group manager issues a group ID in step 380. The group ID serves to uniquely identify the service group in the communication network.

In step 390 a group certificate is issued by the group manager. The group certificate may comprise the group ID, the service ID, and/or additional optional information such as the negotiated level of security or QoS. The group certificate may also comprise a multicast IP address which is used by an IP (internet protocol) based communication network to multicast data to the group members.

The group certificate is sent to the client or the clients. The client acknowledges the reception of the group certificate by sending an acknowledge message to the group manager. The acknowledge message may comprise the service ID, the group ID, the user ID and/or the client ID.

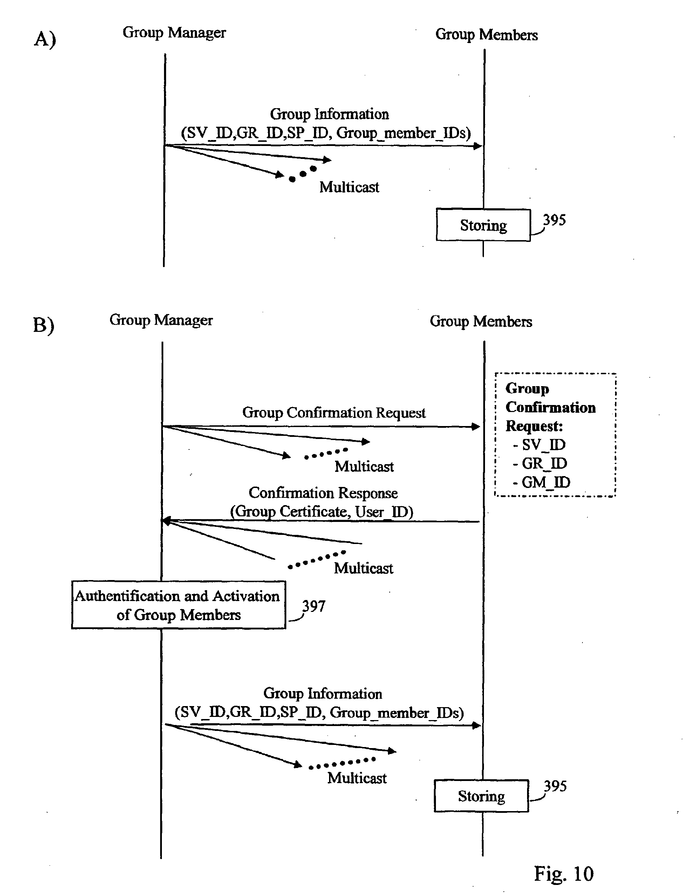

Fig. 10 shows schematically the group confirmation process. In Fig. 10A details of the group confirmation process for an on-spot scenario are presented. In this scenario, the place and time of the service invitation/registration are the same as those of the group confirmation. This means that the group service is operated immediately after the group registration. For instance, in a tentative meeting or tour guide scenario, the group is initiated and the application service is performed immediately after the group setup.

The group manager transfers group information to all group members. The group information message may be multicast using an IP multicast address which has been distributed to the group members as part of the group certificate. The group information message may comprise the service ID (SV_ID), the group ID (GR_ID), the group manager ID (GM_ID), the group member IDs and/or additional optional information. The group members store the received group information in step 395.

In Fig. 10B details of the group confirmation for an off-spot scenario are presented. In this scenario, the place and time of the service invitation and registration are different from those of the group confirmation. This is, e.g., the case, if the group members register to the group in advance and the actual operation of the group service, i.e. the transmission of application data, is performed later and/or in a different location. In this case, the presence and activation of the group members must be confirmed.

The group manager sends group confirmation requests, e.g. by multicast, to the group members. The group confirmation request may comprise the service ID, the group ID, the group manager ID and/or additional optional information.

A group member terminal which is present in the group operation area and receives the group confirmation request responds by sending a group confirmation response to the group manager. The group confirmation response may comprise the group certificate, the user ID and/or additional optional information.

In step 397 the group manager confirms the identification of the received group confirmation response by comparing the received group certificate with the issued service group certificate. If the group confirmation response is authentic, the group manager activates the registration of the respective group member. This group confirmation process may be repeated by a given number in order to collect confirmation responses from group members.

After repetition of the above confirmation or after a predetermined time has expired, the group member manager sends a group information message to all activated group members which store the received information in step 395.

By means of the above group confirmation process for the off-spot scenario, it is possible to confirm the presence of group members and activate the registration of present group members before starting the transmission of application data. Depending upon the service group requirements, an entire group may be confirmed only, if all registered group members are present. It is also possible to confirm a service group and start operation even if not all group members are activated. This gives flexibility for the case that group members have been registered in advance but do not show up on the scene for the service operation, e.g. because group member terminals have moved out of the operational area of the service group, or because they have been deactivated.

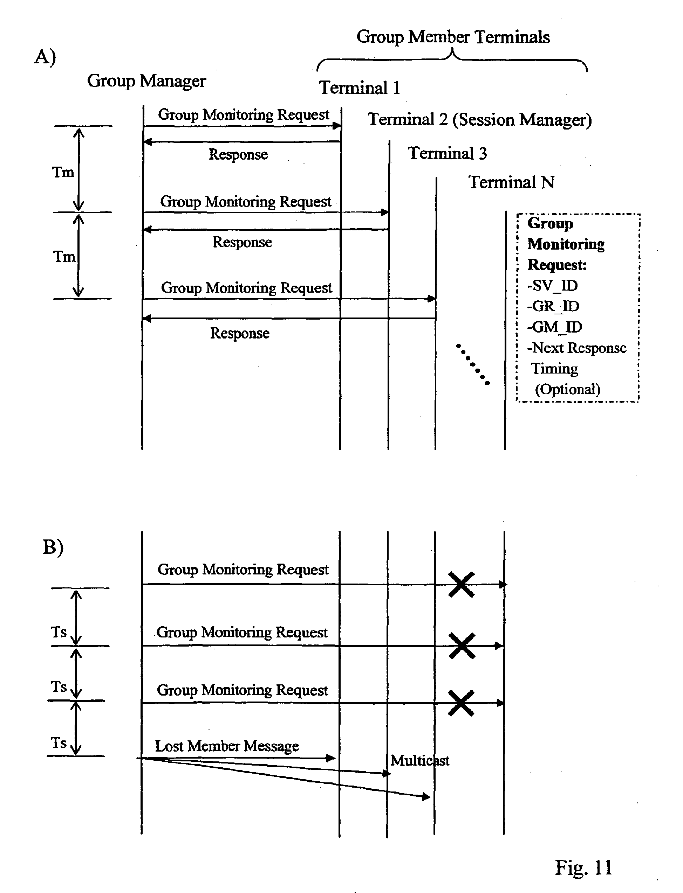

Fig. 11 shows a diagram explaining schematically a first method of monitoring group members. In Fig. 11A, the group manager selects successively a group member and sends a group monitoring request to the selected member. The group monitoring request instructs the group member to send a response to the group manager. The group manager may select the group members in a cyclic manner and check the terminals each by each. For instance, a group monitoring request is sent periodically after a timing Tm is expired.

As an optional measure, the group monitoring request may comprise timing information indicating the time at which the receiving group member is requested to send its next response. The response sent to the group manager may further comprise the state of the group member terminal. A group monitor request may comprise the service ID, the group ID, the group manager ID, and/or, as an optional parameter, the next response timing.

Fig. 11B shows the case that a number of group monitoring requests (here three) have been sent to the group member terminal no. N, but no response has been received by the group manager. In this case - a predetermined number of group monitoring requests have been sent and consecutively no responses have been received from the selected group member - the group manager judges the group member to be a lost group member. The timing Ts that triggers the group manager to send consecutive group monitoring requests to a group member may be Tm or another value. The group manager may send group monitoring responses to group members in an alternating sequence of the group members. The group manager may also send a sequence of group monitoring requests to a single group member, e.g., if a group member terminal has not responded to a preceding request.

As an optional measure, the group manager may ask the sender application or the user of the group manager terminal how to proceed after having detected a missing group member. Some applications may not care about a missing group member while other applications may terminate the service if a single group member is missing. The group manager may inform other group members, in particular session managers, about the status of a missing group member by sending a lost group member message.

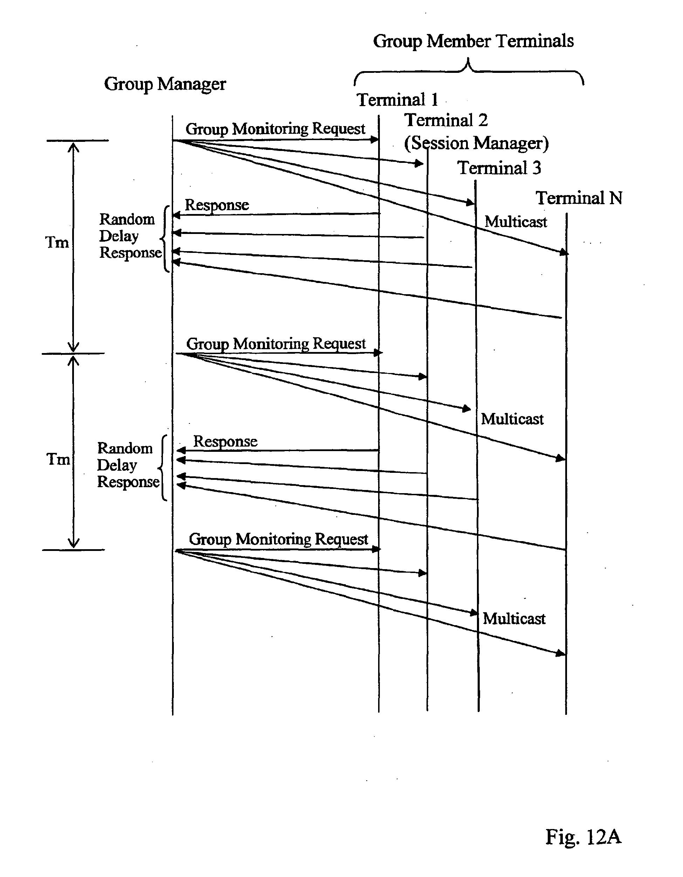

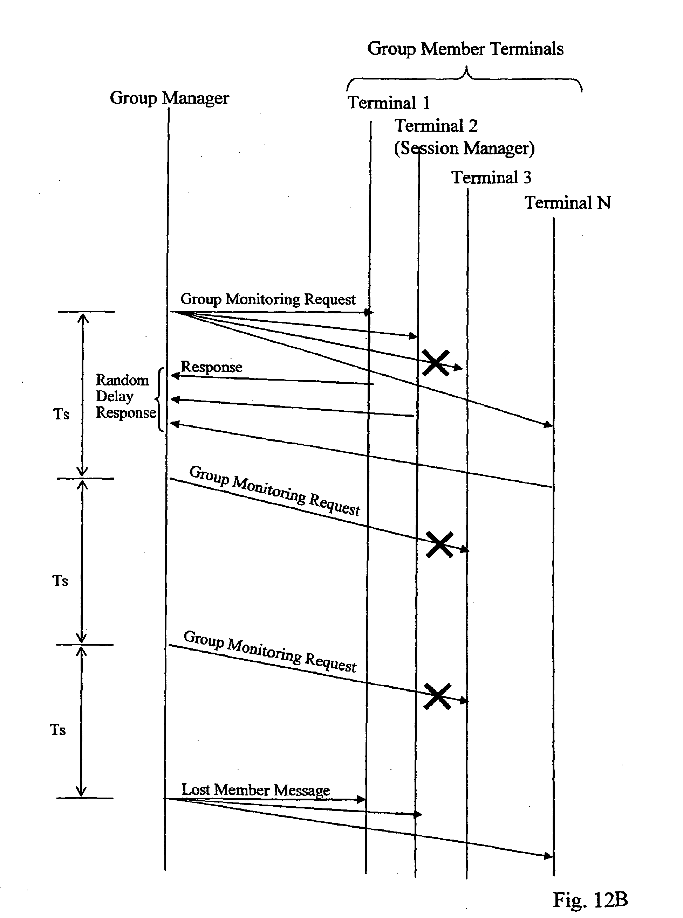

Fig. 12 shows a diagram explaining schematically a second method of monitoring group members. Fig. 12A shows how a group manager sends simultaneously group monitoring requests in a multicast packet to all group members. Group member terminals, which have received a monitoring request, respond by sending (by unicast) a group monitoring response to the group manager. In order to prevent all group members to respond simultaneously, the group monitoring responses may be delayed randomly by the terminals. This allows for a scalable system having a large number of group members without the danger of network congestion.

Fig. 12B shows the case that terminal no. 3 does not respond to consecutive group monitoring requests. If a group member is not responding to a group monitoring request within a predetermined time, it is suitable to send additional individual monitoring requests to this group member. These additional monitoring requests may be send periodically having a timing Ts. After having not received a response for a certain number of requests, the respective group member is judged to be a missing group member.

It is also possible to send group monitoring requests by multicast to all group members, as shown in Fig. 12A. In this case, a group member is judged to be a missing group member, if no response from the respective group member has been received for a consecutive number of group monitoring requests sent to the group members by multicast.

In a preferred embodiment of the invention, the group manager also performs group maintenance. Group maintenance includes the search of missing group members, e.g. in case of a missing group member detected by the group monitoring, and the processing of group membership changes.

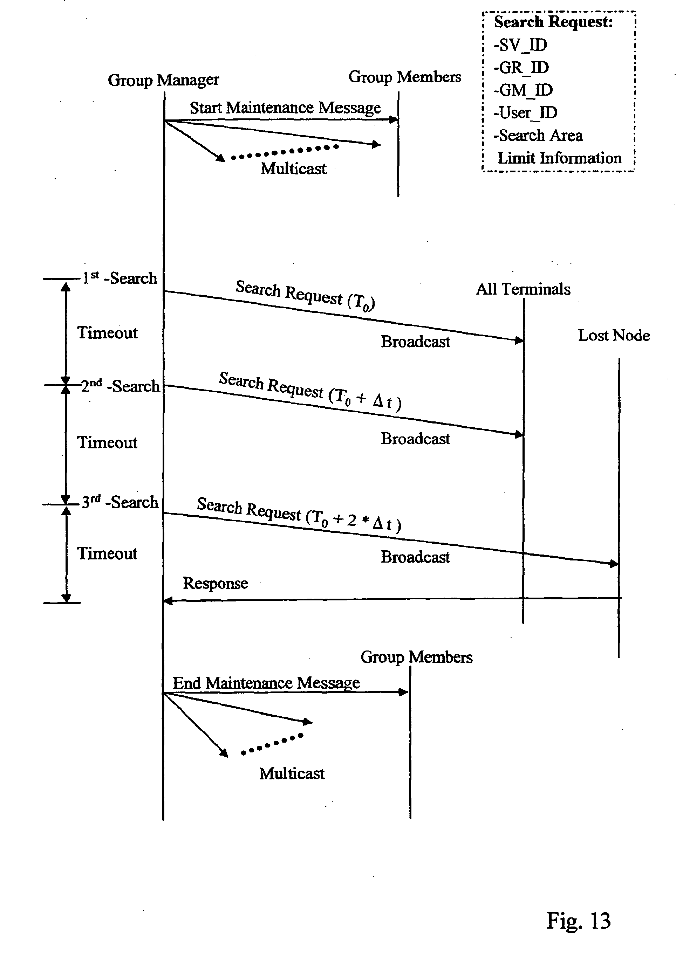

Fig. 13 shows schematically a successful search process for a missing group member. First, the group manager sends a start of maintenance message to the group members including the session managers. With this start of maintenance message, the group members are notified that a search procedure is initiated and the regular service operations should be suspended. This information is used, e.g., by session managers to hold the transmission of application data.

Next, a first search request is broadcast to all accessible network nodes including terminals which are not members of the group, e.g. relay-only terminals. The search request may comprise the service ID, the group ID, the group manager ID, and/or the user ID or terminal ID of the missing group member.

In addition, the search request may comprise search area limit information instructing network nodes, which receive the search request, to relay the received search request to other accessible terminals, if the condition according to the search limit information is met. The search area limit may be a predetermined lifetime of the search request or some other parameter limiting the area of search within the communication network, e.g. a maximum hop count number which indicates the maximum number of hop counts for the search request. Within the lifetime of the search request, the search request is relayed to other accessible terminals by receiving terminals. By this means, the search request is distributed within the communication network in an area which is larger than the operational area of the group, thus enlarging the search area as compared to the group monitoring.

If no response to the search request is received within a predetermined timeout period, a further search request is broadcast. The lifetime information of this consecutive search request is increased, e.g. by incrementing the lifetime by a predetermined time period. By increasing the lifetime of the search request, the search area is increased, because the search packet is relayed to more terminals within its lifetime.

In the example shown in Fig. 13, three search requests are broadcast. The third search request reaches the missing group member and causes a response to be sent to the group manager. In this case, the search is successful, and the group manager sends an end of maintenance message to the group members. The end of maintenance message may include the search result, here the discovery of the missing note.

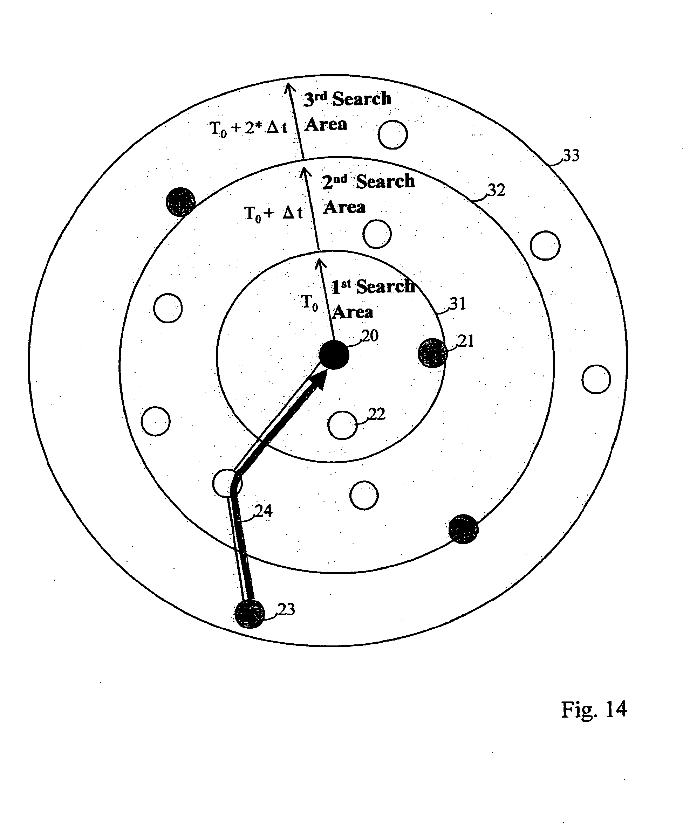

Fig. 14 further illustrates schematically the search for a missing group member. In the first step of the search process, the group manager 20 broadcasts a search request having a lifetime To. Within this lifetime, the search request is relayed by group members 21 and relay terminals 22. A first search area, which is schematically depicted in Fig. 14 by the circle 31, originates. The second search request having a lifetime T₀+ΔT results in the search area 32. The second search area 32 is larger than the first search area, because its respective search request is relayed by the network nodes 21, 22 for a longer period of time until the lifetime expires. In the example shown in Fig. 14, the missing group member 23 is located within the third search area 33 corresponding to the third search request. After having received the third search request, the missing member 23 responds to the search request by sending a response message 24 to the group manager 20.

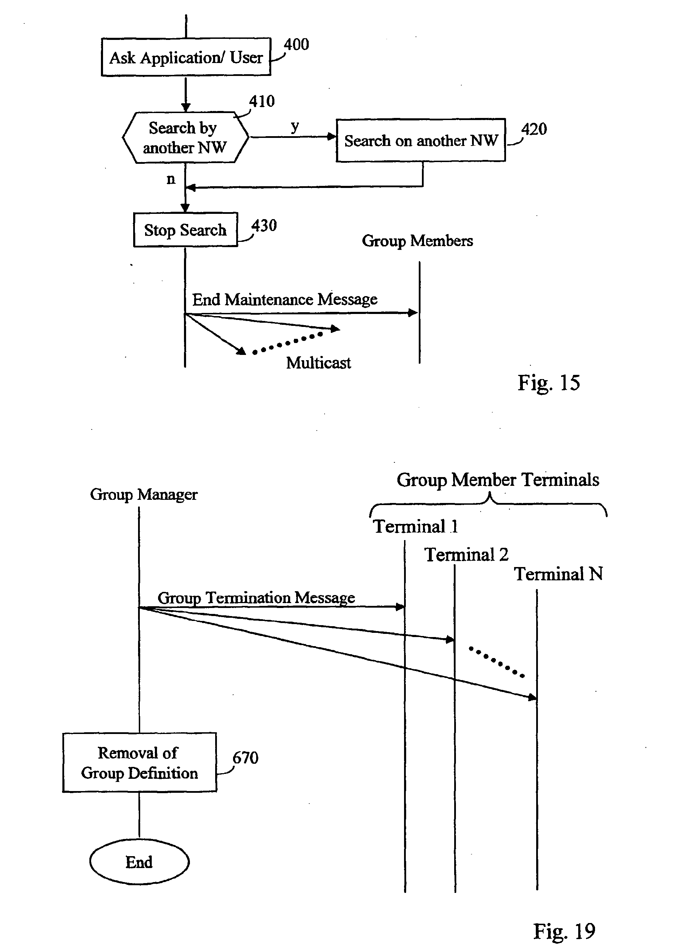

Fig. 15 shows a flow diagram relating to the continuation of the search process of Fig. 13 in case of an unsuccessful search. A missing group member for which no response to a predetermined number of search requests has been received is judged by the group manager to be a lost group member. This status of the group member indicates the unsuccessful result of the search process. While it is possible that a group member is judged to be a missing group member because of temporary problems, such as radio link fading or other temporary disturbances or interferences, an accessibility or availability problem of a longer temporal duration is necessary in order to judge a group member to be a lost group member. Thus, the probability that a lost group member regains access to the group is lower compared to a missing group member.

After the group manager has broadcast a predetermined number of search requests for the missing member (see Fig. 13), and the group manager has not received a response from the missing group member, the group manager asks the service application in step 400 how to proceed with the situation. Depending upon the configuration of the group manager and the sending application, certain actions may be performed. For instance, a group manager may decide to terminate the group, if one or more group members are lost. This is particularly useful for applications which require the presence of all group members. On the other hand, it is also possible to proceed with the application data transmission without taking any further action.

In step 410 it is determined, if a search for the missing group member should be performed by another communication network. In the affirmative, a further search process using another communication network is performed in step 420. This network may be an infrastructure based wireless network such as GSM or a wire-based communication network such as WAN. By using a different communication network to perform the additional search for the missing group member, there is a certain possibility to contact the missing member, in particular, if the disturbance or interference causing a network problem in the primary communication network does not affect the secondary network.

If the search for the missing member on the secondary communication network is also not successful, the search process is stopped in step 430. Thereafter, the remaining group members are informed about the search result and the end of the group maintenance.

In addition, it is possible to perform further actions upon an unsuccessful search. In particular, it may be useful to remove the missing member from the group, to update group control information and/ or to inform the remaining group members about the changed group control information.

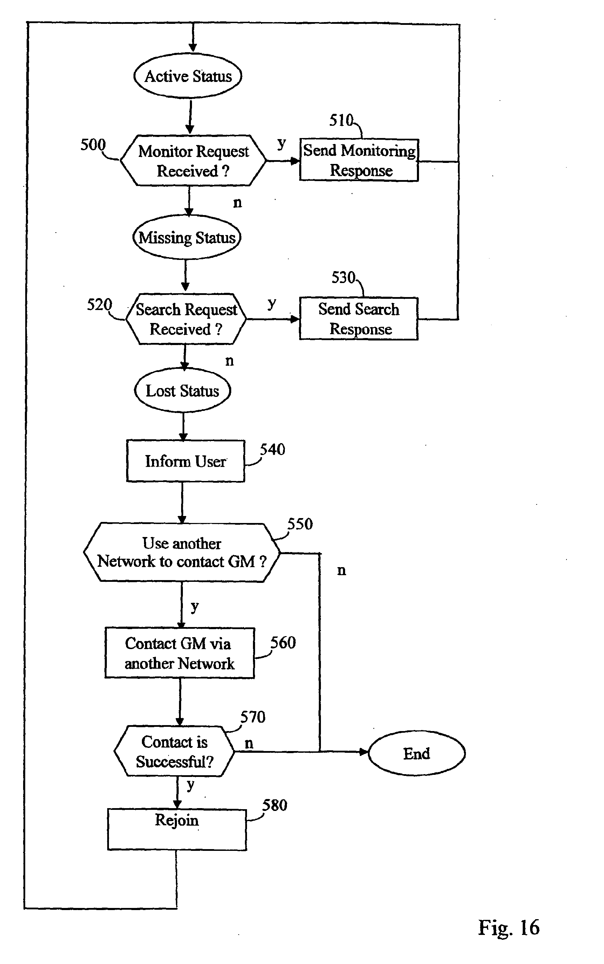

Fig. 16 shows a flow diagram of the process which is performed in a network node in case that the network node becomes detached from the service group. In step 500 the terminal detects, if a group monitoring request has been received within a predetermined time period. In the affirmative, a monitoring response is sent to the group manager in step 510. If no monitoring request is received for a certain time, the terminal decides that it is a "missing" terminal.

In step 520 the terminal detects, if a search request addressed to the terminal is received. If the terminal receives a search request from the group manager within a certain timeout period, a search response is sent to the group manager in step 530 in order to inform the group manager that the search process has been successful.

If the terminal does not receive a search request within the predetermined timeout period, it decides to be a "lost" terminal. In this case, the terminal may inform the application about its status. In step 540, the user of the terminal is informed about the disconnected situation.

In step 550 the user is asked, if another network should be used for additional attempts to contact the group manager. If the user decides to try another communication network, the terminal attempts to establish a contact to the group manager via the second network in step 560.

In step 570 it is determined, if the attempt to contact the group manager via the secondary network is successful. In the affirmative, a rejoin process is performed in step 580 in order to report back with the group manager. In this case, the lost terminal has regained access to the service group and may again participate in the group service. The process proceeds with step 500.

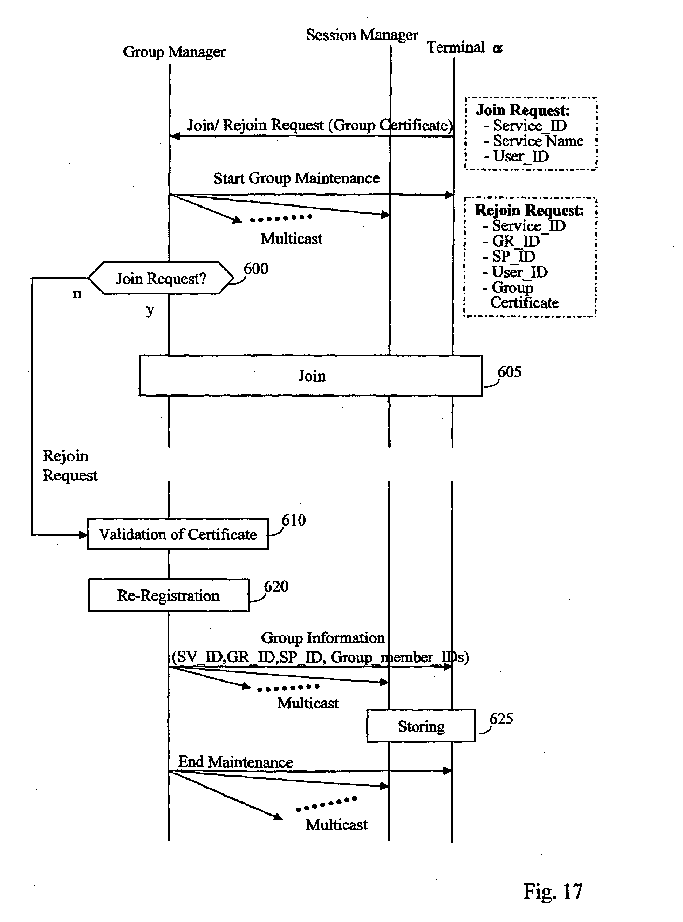

Fig. 17 shows schematically the group maintenance process concerning group membership changes. First, the group manager receives a join or rejoin request from terminal α. Next, the session manager notifies the group members about the start of group maintenance due to a group membership change.

In step 600 it is decided whether a join or rejoin request has been received. If a join group request has been received by the group manager, a join process is performed in step 605. This join process is similar to the initial registration process shown in Fig. 9B and allows new terminals to register with the group. Details of the join process have been explained in relation to the initial registration process shown in Fig. 9B.

If in step 600 a rejoin request is detected, a rejoin process is performed. The rejoin process allows a group member terminal, which has been temporarily disconnected from the group (i.e. lost group member), to rejoin with the group after the connection has been reestablished. The rejoin request may comprise a service ID, a group ID, a service provider ID, a user ID, a group certificate, and/or additional optional information.

In step 610 a received group certificate is validated by the group manager. The group manager verifies that the received group certificate corresponds to the issued group certificate of the service group, thereby verifying the authentication of the group member.

In step 620 the group manager registers the terminal α to be again present/ active. The group manager may set a respective flag for the group member in the group definition to indicate that the lost group member has rejoined the group and is now active.

Next, the group manager informs the group members including session managers about the changed group definition by sending the updated group information. This information is stored by the group members in step 625. Finally, the group manager informs the group members about the end of group maintenance.

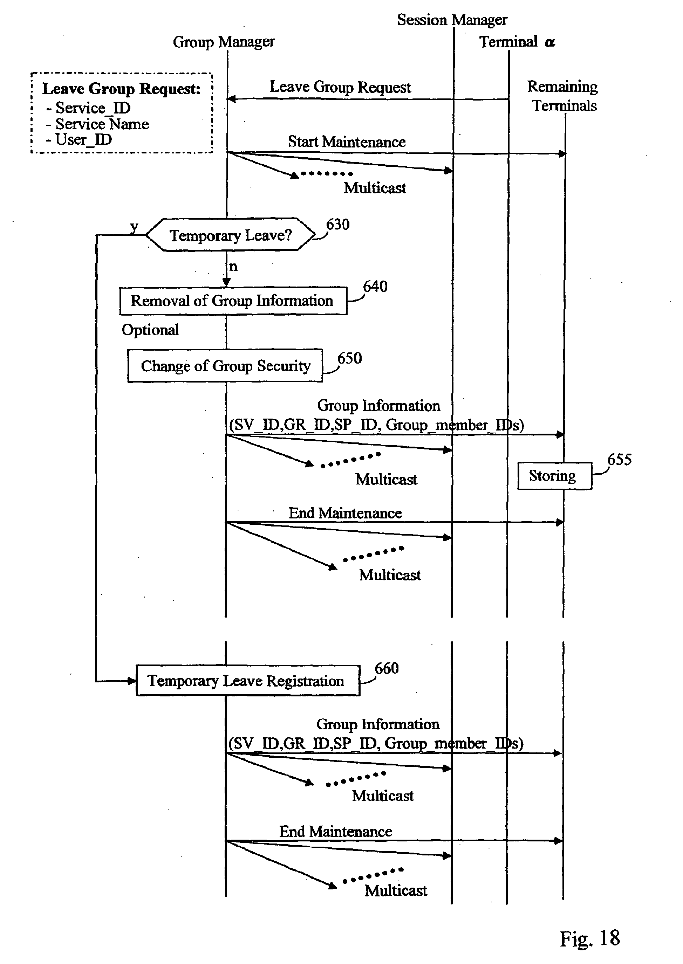

Fig. 18 shows schematically the group maintenance process involved when a group member intends to leave the service group. If a terminal would leave the service group without sending a leave request, the terminal would be detected as a "missing" terminal by the group manager, and a search procedure for the terminal would be performed. By requesting an explicit leave from the group, a group member can un-register from the group and leave the group without initiating a search process.

Upon receiving a leaving group request, the group manager notifies the group members about the start of group maintenance by sending a respective multicast message to all group members.

In step 630 it is detected whether the leave request applies for a temporary leave or a permanent leave. In case of a permanent leave, the information corresponding to the respective terminal α is removed from the group definition in step 640. As an optional measure a change of the group security may be required due to the leaving of terminal α. This process may be performed in step 650.

Next, the group manager sends the updated group information to the group members which store the received group information in step 655. Then, the group manager informs the group members about the end of the group maintenance.

If in step 630 a temporary leave of terminal α is detected, the terminal is registered in the group definition as being on a temporary leave from the group. A temporary leave is particularly useful for a group member which cannot participate in the group service for a certain period of time, but intends to rejoin the group later. This may be performed by sending a rejoin request to the group manager when the terminal is ready again (see Fig. 17). After the terminal has been registered as a temporary leave from the group in step 660, the group manager sends updated group information to the group members and informs these about the end of the group maintenance.

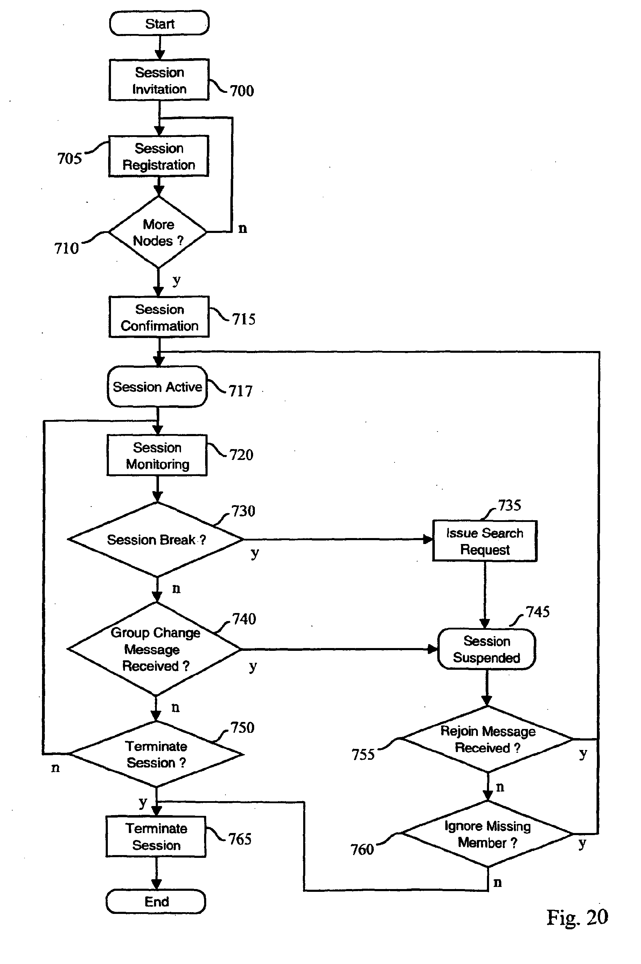

Fig. 19 shows schematically a group termination process. If the group manager decides to terminate the group, e.g. because no session is active within the service group, the group manager sends a termination message to all group members. In step 670 the group manager removes the group definition and then terminates the group control.

Fig. 20 is a flow diagram illustrating schematically the session control process. In step 700 a session invitation is sent to the group members of the service group.

In step 705 a group member, which has responded to the session invitation by sending a session participation request, is registered as a session member.

In step 710 it is detected whether a session registration period has expired. During this session registration period group members may register for the session. However, it is also possible to automatically enroll all group members in a session. In this case, a session registration by the individual group members is not required.

After the session registration period has expired, the session confirmation process is performed in step 715. In the session confirmation process, the session manager, which is usually the sender of application data, confirms the presence of all registered session members and verifies that the respective applications performed by the session members are activated. After the confirmation of the session, the session is activated and the data transmission process is started in step 717.

In step 720 the session monitoring process to monitor the status of the active session is performed. The session monitoring process comprises the sending of session monitoring probes to the session members in order to detect the connection status of the session. Session members respond to received session monitoring probes by sending a session monitoring response to the session manager. If no session monitoring response has been received from a session member, a problem with the connection to the session member or with the session member itself is detected, and a session break is decided.

In step 730 it is detected, if the session monitoring has decided a session break. In the affirmative, a search request for the respective session member causing the session break is issued in step 735. This search request is sent to the group manager which is in charge of tracking the group members. The group control may be performed by the same network node as the session control; however, it is also possible that the group control is performed by a different network node which has initiated the service group. In this case, the search request is transmitted by the communication network to the respective network node performing the group control.

In step 740 it is detected, if a group change message has been received by the session manager. A group change message is sent by the group manager to all session managers after the group manager has performed a change in the group definition. In this case, the session managers should be informed about the changes in the group definition. In step 745 the session is suspended. This stops the transmission of application data to session members.

In step 755 it is determined, if a notification of a rejoin request has been received. If a rejoin request is received by the group manager a respective message is sent to the session managers to indicate that a missing or lost member group member has been successfully contacted again. In this case, the session control continues with step 717 by reactivating the session.

In step 760 the response to a missing or lost session member is decided by the session manager. Depending upon the session configuration, it is possible to ignore a missing or lost session member and continue the session control by reactivating the session (step 717). This is particularly useful, if the sender of the application data (session manager) does not care about the presence of individual session members. This could be the case, for instance, for an audio streaming application which broadcasts audio data to receivers. However, the session manager may also decide to terminate the session in step 765.

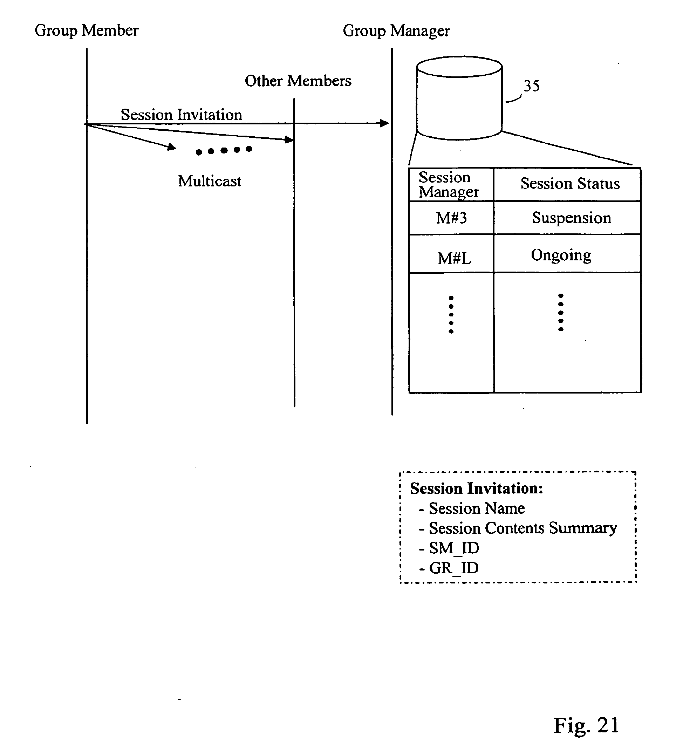

Fig. 21 shows schematically the session invitation process performed by a terminal which wants to start transmitting application data to other group members. This terminal with sending data becomes the session manager of a new session and sends a session invitation to the other group members. A session invitation may comprise a session name, a session contents summary, a session manager ID (SM_ID), a group ID, and/or additional optional information.

As an optional measure the group manager which is also a group member may listen to session invitations and maintain a session data base 35 for the service group. The group manager registers all sessions within the group in the session data base 35 by noting the respective session manager and the session status.

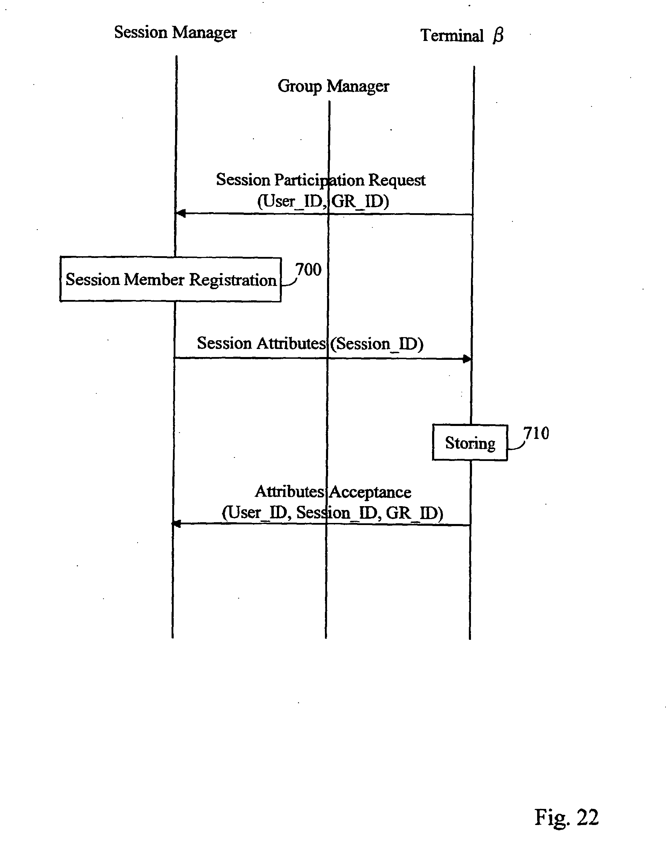

In Fig. 22 a session registration process is schematically illustrated. A terminal β, which has received the session invitation and wants to join the session, sends a session participation request to the session manager. The session participation request may comprise the user or client ID of the terminal, and/or the group ID. The session manager receives the session participation request from terminal β and registers terminal β in step 700.

After additional terminals have registered, the session manager defines the session and compiles the session information which may comprise session attributes and information on the session members. Optional session attributes are, e.g., a minimum required bandwidth, a network link quality (e.g. a required error rate), a minimum network throughput, a maximum network delay, a data priority, a quantity of data, a charge policy, a required level of security, etc.

As an optional measure, the session manager sends session attributes, such as a session ID, a required level of security, and/or a quality of service (QoS), to the registered terminals. The terminal β stores the received session attributes in step 710 and sends an acceptance message to the session manager. By sending the acceptance message, the terminal confirms that it accepts the received session attributes and is able to meet the respective session requirements.

As an optional measure, the group manager may listen to the session invitation and registration messages transferred between the session manager and session members. By listening to these messages, the group manager may compile and update the session data base 35, e.g. by writing information relating to session members in the data records of the individual sessions.

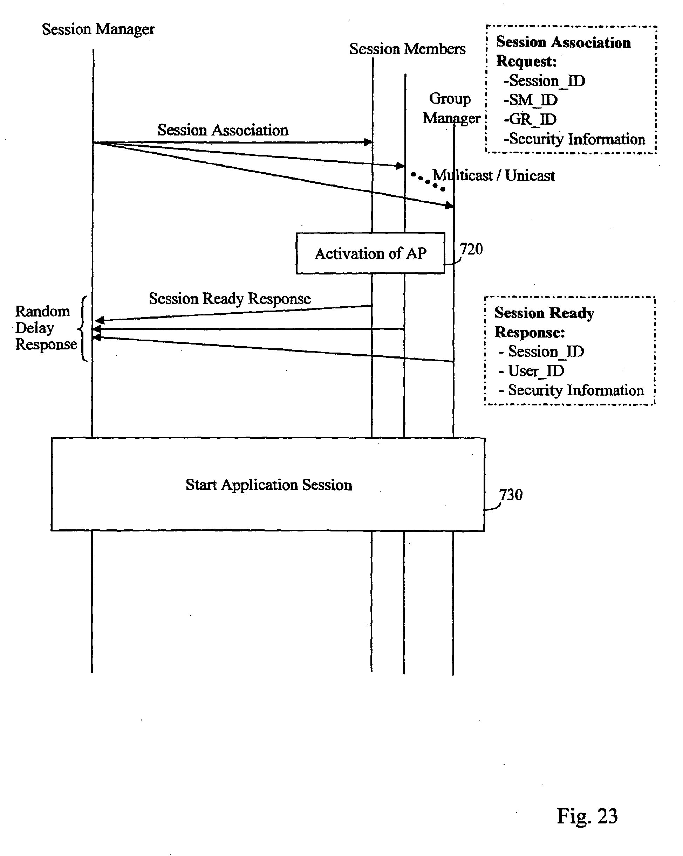

Fig. 23 shows schematically a session confirmation process. A session manager (SM) which is also the sender of the application data sends a session association request to the session members. The session association request may comprise the session ID, the session manager ID, the group ID, security information, and/or additional optional information. The session members which receive a session association request prepare to receive application data, for instance, by activating their respective application to receive the transmitted data (step 720).

When a session member is ready to receive application data, the session member sends a session ready response to the session manager. In order to prevent all session members to send their session ready responses simultaneously, a random delay period may be used by the session members. A session ready response may comprise the session ID, the user ID, security information, and/or additional optional information.

After having receiving session ready responses from all session members, the session manager may optionally verify the authentication of the session members by comparing the information received with the session ready responses to the respective information in the session definition. If the session manager decides that all session members are ready and authenticated, the session manager starts the sending application. In step 730 application data is transferred from the sender to the session members.

As an optional measure, the group manager may again listen to the messages exchanged between the session members in order to update the session data base 35.

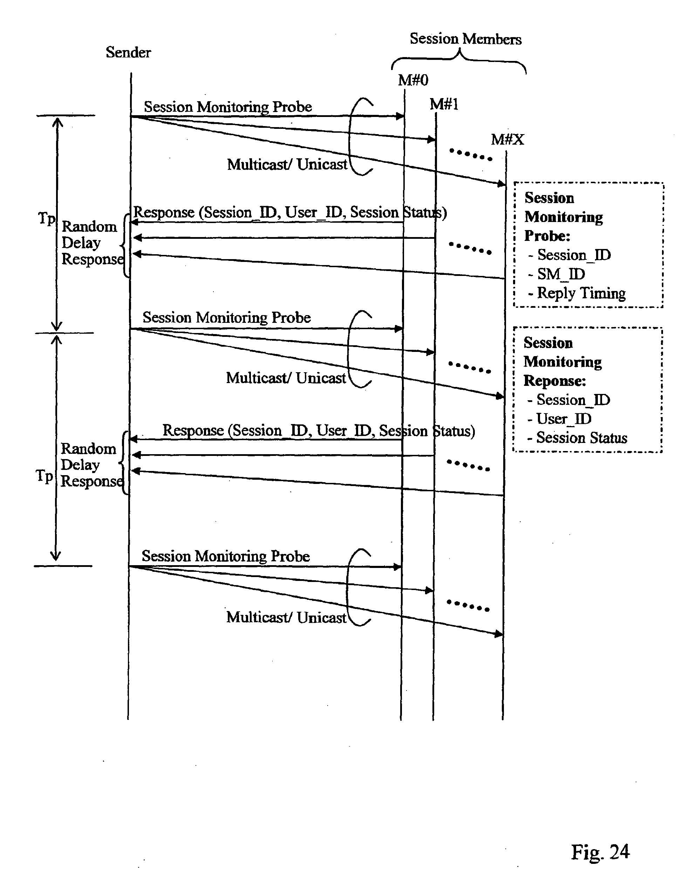

Fig. 24 shows schematically a first session monitoring process for monitoring the session attribute status with each session member. The session manager transfers a session monitoring probe to the session members with the transmission of application data. The session monitoring probe may be transferred with every data frame which is transmitted by multicast or unicast to the session members. In order to reduce the overhead resulting from the transfer of session monitoring probes, it is also suitable to transfer session monitoring probes with every other data frame. The distance between data frames carrying the session monitoring probes may be determined so as to probe the session members periodically having a session probing period Tp. The session monitoring probe may be designed as a probe header which is attached to the application data packets. A session monitoring probe may comprise the session ID, the session manager ID, a reply timing, and/or other optional information.

Session members receiving session monitoring probes respond by sending a session monitoring response to the session manager. A session monitoring response may comprise the session ID, the user ID, the session status, and/or other optional information. In order to avoid a network congestion caused by a plurality of session members responding simultaneously, the session members may respond to the session monitoring probe by applying a random delay. In this case, the sending of session monitoring responses is performed based on a random delay time after having received a session monitoring probe. The random delay time may be controlled by the reply timing information of the session monitoring probe.

In case that after a predetermined number of times no response to consecutive monitoring probes has been received, the session manager decides a session break caused by the respective terminal which is not responding. Accordingly, the session manager monitors the session status with the session members and detects problems such as a missing or inactive session member. Because the session monitoring is performed in combination with the data transmission, the additional computational costs and network load is low.

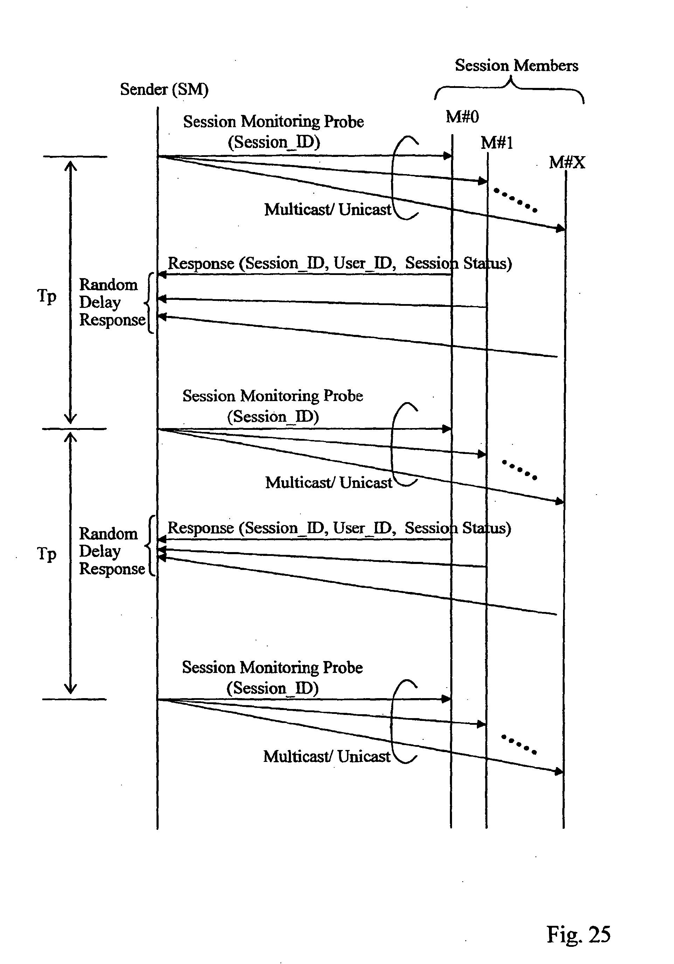

Fig. 25 shows schematically a second session monitoring process in which the session monitoring probe is transferred independently of the data transmission. Separate session monitoring probe(s) is/ are transferred periodically to the session members by unicast or multicast. The session members respond to received session monitoring probe by sending session monitoring responses to the session manager. Again, the session monitoring responses may be sent after a random delay time has expired.

If no session monitoring response has been received from a session member for a predetermined number of consecutive session monitoring probes, the session manager decides a session break. Although this method requires a slightly higher network load, it provides a higher flexibility in monitoring the session. For instance, it is possible to probe different session members based on individual session probing periods Tp. This has the advantage that session members which are important for the session or session members having already experienced some problems may be monitored more frequently.

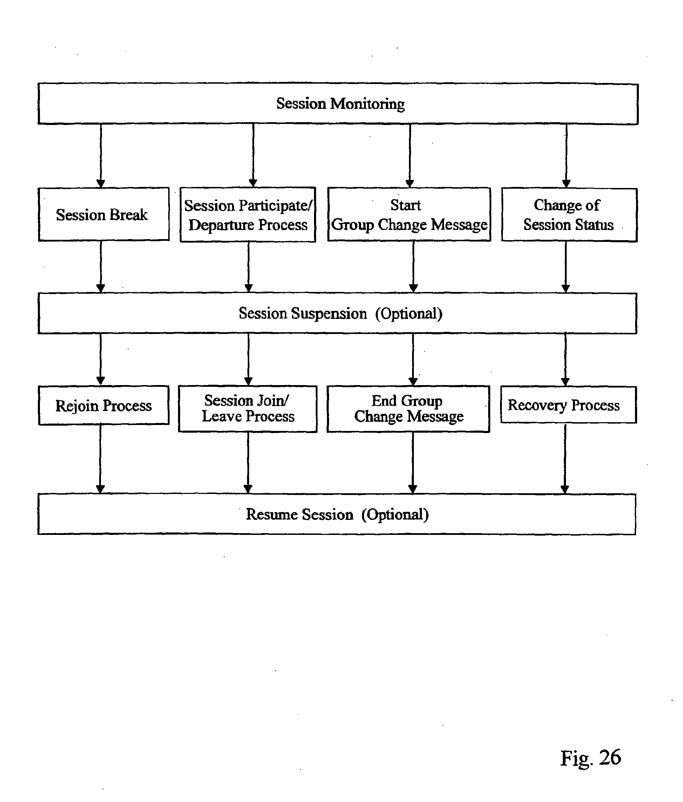

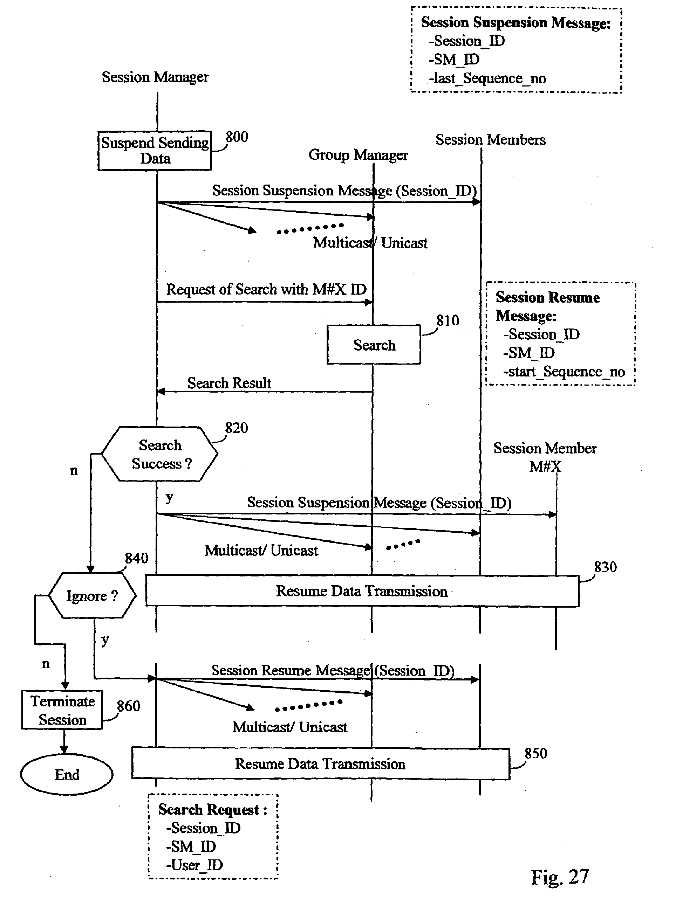

Fig. 26 shows schematically the main control flow of the session maintenance performed by the session manager. Depending upon predetermined conditions, the session status may be changed, and, as an optional measure, a session suspension process and/or a session resume process may be performed. If a session break is detected by the session monitoring process, the respective session is interrupted or suspended. In addition, a session break recovery process may be performed, as described in Fig. 27.

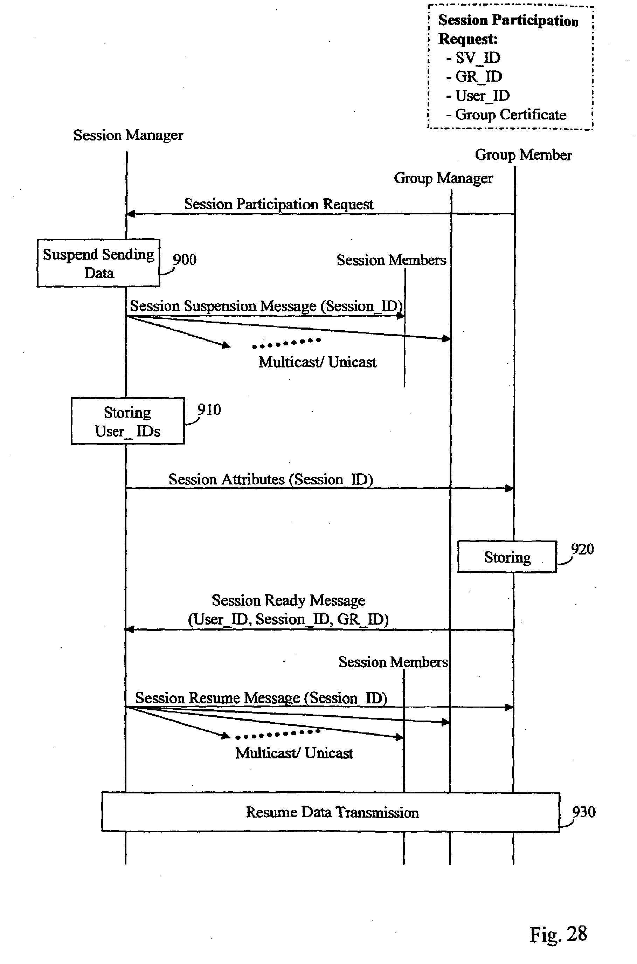

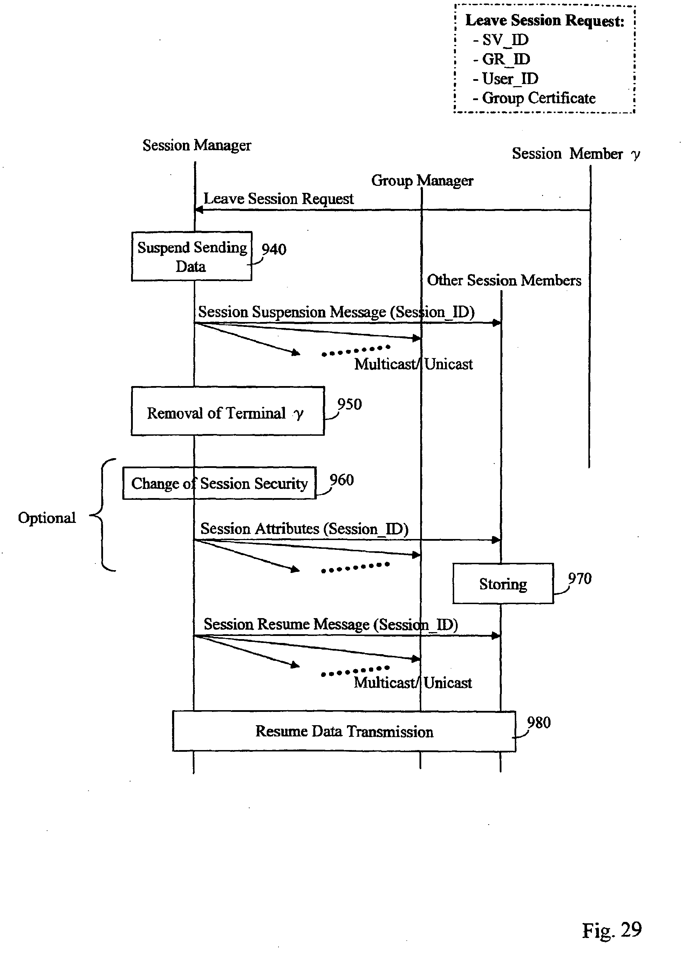

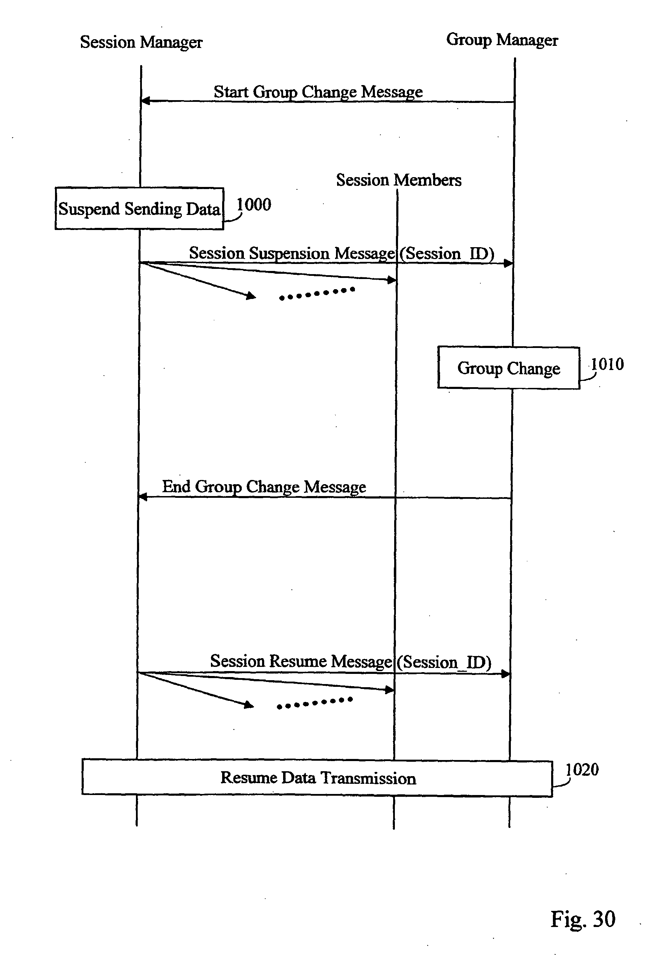

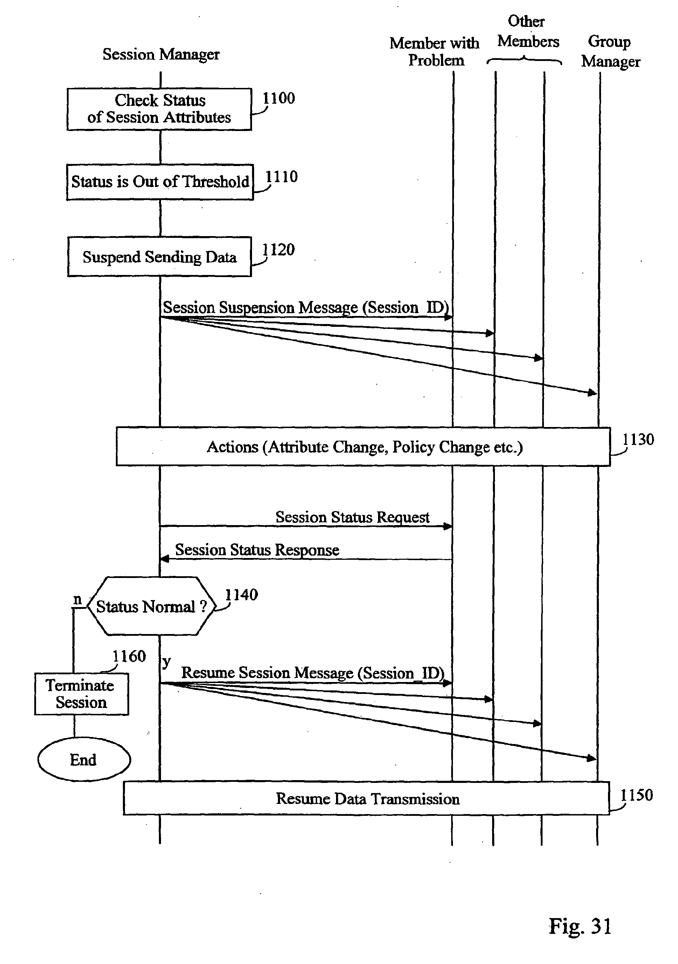

If the session manager receives a session participation request, a session participation process as shown in Fig. 28 is performed. If the session manager receives a leave session request, a session departure process as shown in Fig. 29 is performed. If the session manager receives a group change message from the group manager, a group change process as shown in Fig. 30 is performed. In case that the session attribute status changes, a session attribute update procedure as shown in Fig. 31 is performed.

A suspended session may be resumed, if a rejoin request is received, a session join/leave process is performed, a end of a group change message is received from the group manager, and/or a recovery process is performed.

Fig. 27 shows schematically a session break recovery process. If a problem with a session member is detected by the session monitoring (session break) and/or a missing group member message is received from the group manager, the session manager, which is usually also the sender of the application data, suspends the sending of application data in step 800.

Then, the session manager sends a session suspension message to the group manager and the session members to notify these terminals about the suspension of the session. A session suspension message may comprise the session ID, the session manager ID, the last sequence number, and/or other optional information.

The session manager sends a search request for the respective session member causing the session break to the group manager. A search request may comprise the session ID, the session manager ID, the user ID of the missing session member, and/or additional optional information.

In step 810 the group manager performs a search for the missing group member as shown in Figs. 13 to 16. Then, the group manager informs the session manager on the result of the performed search. In step 820 the session manager decides upon the received search result how to proceed with the suspended session.

If the search for the missing session member has been successful, the session manager sends a session resume message to the group manager and the session members. Since, in this case, the session member no. x which caused the session break has successfully been contacted, the session resume message is also send to this terminal. The session resume message may comprise the session ID, the session manager ID, a start session number, and/or additional optional information.

In step 830 the suspended session is resumed. The session status is switched to active and the data transmission from the session manager to the session members is resumed.

If in step 820 an unsuccessful search is detected, the session manager decides in step 840 how to proceed with the suspended session. The session manager may ask the user whether to resume or terminate the session. The consequence of an unsuccessful search may also be determined automatically based on the session attributes. If the session manager decides to ignore a lost session member and to resume the session with the remaining session members, a resume session message is sent, and the data transmission is resumed in step 850. If the session manager decides that the session may not be continued without the lost session member, the session is terminated in step 860.

Fig. 28 shows schematically a session participation process. A group member sends a session participation request to the session manager asking to be registered as a session member. The session participation request may comprise the service ID, the group ID, the user ID, the group certificate, and/or other optional information.

In step 900 the session manager suspends the session and stops the transmission of application data. Next, the session manager informs the session members about the session suspension.

In step 910 the session manager registers the group member as a session member and stores the user ID of the group member.

The session manager sends session attributes to the group member which stores the received session attributes in step 920. The group member terminal may ask the user of the group member to accept the received session attributes.

When the group member is ready to receive the application data, the group member sends a session ready message to the session manager which resumes the suspended session and informs the session members by sending a session resume message to the session members. In step 930 the data transmission from the session manager to the session members is resumed.

Fig. 29 shows schematically a leave session process. The session member γ which wants to leave the session sends a leave session request to the session manager. The leave session request may comprise the service ID, the group ID, the user ID, the group certificate, and/or other optional information. As an optional measure, the session manager may send information on the session status, such as information on a charge, on the account, and statistics, to the session member γ.

In step 940 the session manager suspends the session and stops sending application data. The session manager sends a sesssion suspension message to the session members.

In step 950 the session manager un-registers the session member γ which wants to leave the session from the session definition. The session manager removes the respective session attributes of the leaving terminal from the stored session information.

As an optional measure, the session manager may change the security information due to the departure of the session member γ in step 960. The session manager may send the changed session information to the remaining session members which store the received session attributes in step 970.

After the session member γ has been un-registered, the session manager resumes the session and reactivates the transmission of session data to the session members in step 980.

Fig. 30 shows schematically a group change process which is performed upon a change in the group definition, e.g. a group member leaving the group. The group change process is initiated by a starting group change message sent from the group manager to the session manager. In step 1000 the session manager interrupts the sending of session data and suspends the session for the duration of the group change.

In step 1010 the group manager performs the required steps for changing the group definition. After new group members have been added to the service group and/or group members have been deleted, the group manager sends an end group change message to the session manager.

Upon receiving the end group change message, the session manager resumes the session and sends a resume session message to the group members and the group manager. In step 1020 the data transmission is resumed.

Fig. 31 shows schematically a session attribute update process which is involved when the session attributes change. Session attributes which may be updated during session operation are, e.g. the data throughput, the error rate, delay, etc.

In step 1100 the session manager checks the status of session attributes with the session members. In step 1110 the session manager detects that the session status for a session member is not correct. This may be the case, e.g., if a session attribute exceeds a predetermined attribute threshold. In step 1120 the session manager interrupts sending application data and suspends the session.

Depending upon the detected problem, the session manager may take some actions in step 1130 in order to fix the problem and continue the session. The session manager may, e.g. change session attributes or the session policy.

Next, the session manager asks the session member causing the problem for a session status report to see, if the session problems have been cleared.

In step 1140 the session manager decides, if the session status is in a normal state. If the session manager has successfully cleared the problem, the session is resumed and the data transmission is reactivated in step 1150.

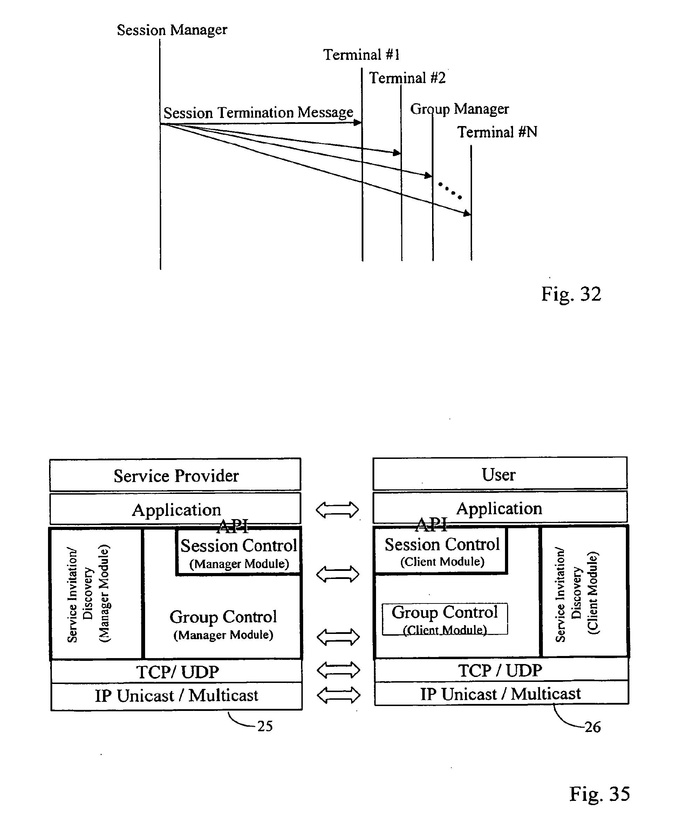

As an optional measure, the session may be terminated in step 1160 if the session status considered in step 1140 is not back to a normal session status. It is also possible to perform additional actions to clear the session problem and/or ask the user of the client manager terminal how to proceed with the suspended session and the session member causing the problem. For instance, if it is decided to terminate the session, the session manager sends a session termination message to the session members and the group manager, as shown schematically in Fig. 32.

Upon receiving the session termination message, the session members may perform appropriate action, e.g. terminating the application on the receiving end side of the session. The group manager may use the received session termination message to update the session data base 35. If, for instance, all sessions within the service group are terminated, the group manager may also decide to terminate the entire service group.

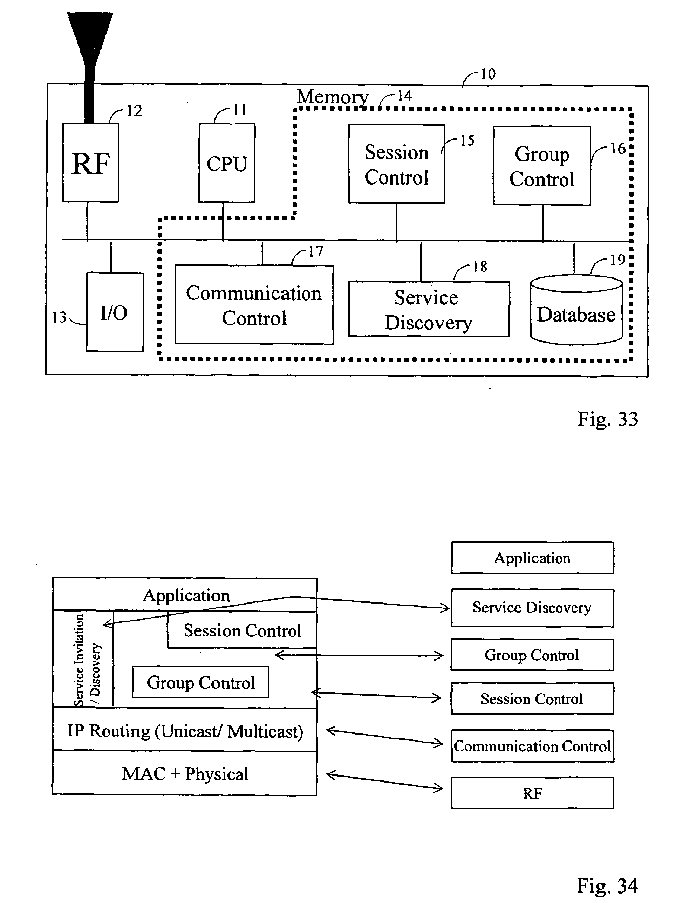

Fig. 33 shows a block diagram of the hardware structure of a network node 10 adapted to operate group services according to the present invention.

The network node 10 has a CPU 11, a radio frequency interface 12, an I/O interface 13 and a memory 14. In the memory 14, a program to perform the session control 15 and the group control 16 including the service discovery 18 according to the present invention are stored. In addition, a program and data to perform a communication control 17 are stored in memory 14. The network node 10 also comprises a data base 19 for storing service group data and/or the session data base 35.

An apparatus for operating group services in a communication network according to the present invention comprises group control means and session control means. In a preferred embodiment of the invention, the group control means are designed as CPU 11 performing the group control program 16 stored in memory 14. The session control means may be designed as CPU 11 performing the session control program 15 stored in memory 14.

Fig. 34 shows the software structure of a preferred embodiment of the invention. Session control, group control and service discovery are arranged in layers between the communication control and the application.

Fig. 35 shows the relation between the software structure of a manager terminal 25 and a client terminal 26. A manager terminal 25 performs group control and/or session control and sends application data to the client terminal 26. A client terminal 26 may be a receive-only terminal receiving application data from a manager terminal 25. However, a client terminal 26 may also take over the role of a group manager and become a manager terminal 25. In addition, an application on the client terminal 26 may have application data to be transferred to other terminals. In this case, the client terminal 26 becomes a sender for the application data, starts a new session, and becomes session manager, i.e. becomes a manager terminal 25.

It will be appreciated that the present invention is not restricted to the described embodiments and many modifications may be made to the embodiments described above without leaving the scope of the invention.

## Claims

1. Method of operating group services in a mobile ad-hoc network (1) comprising a plurality of network nodes (10, 20-22), the method comprising:
performing a group control process (120) by a group manager node (20) of the network nodes (10, 20-22) to control the membership of network nodes (10, 20-22) in a service group consisting of a subset of the network nodes (10, 20-22) in the communication network (1);
performing a session control process (130) to control a connection status of a session for providing a communication connection between member nodes (21) of the service group so as to enable a communication of an application operating on the service group member nodes (21),
performing the session control process (130) by a session manager node other than the group manager node (20) and separately from the group control process (120), and
configuring the session control process (130) to control independently the connection status of each of a plurality of sessions within the service group, wherein
the group control process (120) comprises monitoring group members (21) by sending group monitoring requests to group members (21) and by monitoring the responses from the group members (21).

2. Method according to claim 1, wherein the group control (120) comprises defining a service group by a group manager (20) based upon group attributes, in particular a group name, a group identifier, a group manager identifier and/or group member identifiers.

3. Method according to claim 1, wherein the group control (120) comprises detecting an existing service group having required group attributes.

4. Method according to claim 1 or 2, wherein the group control (120) comprises sending a group invitation to nodes by the group manager (20).

5. Method according to any of claims 1 to 4, wherein the group control (120) comprises discovering a group invitation received from a group manager (20) and/or sending a group registration request to the group manager (20).

6. Method according to any of claims 1 to 5, wherein the group control (120) comprises registering a group member based upon a group registration request received from a node (10, 20-22).

7. Method according to any of claims 1 to 6, wherein the group control (120) comprises generating a group certificate, wherein the group certificate is used in the communication between the group manager (20) and group members (21) to identify the service group.

8. Method according to any of claims 1 to 7, wherein the group control (120) comprises generating group control information by the group manager (20) and sending group control information to the group members (21), wherein the group control information includes group attributes.

9. Method according to any of claims 1 to 8, wherein the group manager (20) sends group confirmation requests to group members (21); the group members (21) respond to received group confirmation requests by sending group confirmation responses to the group manager (20); and the group manager (20) activates the registration of group members (21) in dependence on received group confirmation responses.

10. Method according to claim 9, wherein the monitoring of group members (21) comprises sending multiple group monitoring requests periodically to individual group members (21), and judging a group member (21) to be a missing group member, if no response has been received from the group member (21) for a predetermined number of group monitoring requests.

11. Method according to claim 9, wherein the group manager (20) sends a group monitoring request to all group members (21) by multicast, and the group members (21) send group monitoring responses to the received group monitoring requests to the group manager (20), wherein the group monitoring responses are send based on a random delay after the reception of the group monitoring requests.

12. Method according to any of claims 9 to 11, wherein the monitoring of group members (21) comprises searching a missing group member (21) by sending a search request for the missing group member (21) to accessible nodes (10, 20-22).

13. Method according to claim 12, wherein a search request having a lifetime parameter is broadcast to all accessible nodes (10, 20-22).

14. Method according to claim 12 or 13, wherein, if no response from a missing group member (21) is received within a predetermined time period, further search requests are send periodically, wherein the life times of successive search requests are increased.

15. Method according to claims 12 to 14, wherein the search for a missing group member (21) is performed using multiple communication networks (1).

16. Method according to any of claims 12 to 15, wherein a missing group member (21) is judged to be a lost group member (21) if no response to one or more search requests for the group member (21) has been received.

17. Method according to claim 16, wherein the following steps are performed, if a lost group member (21) is determined:
updating of group control information, and
notifying the remaining group members (21) about the updated group control information.

18. Method according to any of claims 1 to 17, comprising:
sending rejoin requests to the group manager (20), if a group member (21) receives a monitoring request or a search request from the group manager (20) after having not received a request for a predetermined period of time.

19. Method according to claim 18, wherein the group manager (20) performs the following steps:
receiving a rejoin request from a lost group member (21),
updating the group control information, and
notifying the group members (21) about the updated group control information.

20. Method according to any of claims 1 to 19, wherein a group member (21) sends a leave group request to the group manager (20); the group manager (20) updates the group control information and notifies the group members (21) about the updated group control information.

21. Method according to any of claims 1 to 20, wherein a session member sends a leave session request to the session manager; the session manager updates the session control information and notifies the session members about the updated session control information.

22. Apparatus for operating group services in a mobile ad-hoc network (1) comprising a plurality of network nodes (10, 20-22), the apparatus comprising:
group control means (120) to control the membership of network nodes (10, 20-22) in a service group consisting of a subset of the network nodes (10, 20-22) in the communication network (1), the group control means (120) being arranged in a group manager node (20); and
session control means (130) to control a connection status of a session for providing a communication connection between member nodes (21) of the service group so as to enable a communication of an application operating on the service group member nodes (21), wherein
the session control means (130) are arranged in a session manager node other than the group manager node (20) and operate separately from the group control means (120), and
the session control means (130) are configured to control independently the connection status of each of a plurality of sessions within the service group, wherein
the group means (120) monitors group members (21) by sending group monitoring requests to group members (21) and by monitoring the responses from the group members (21).

23. Apparatus according to claim 22, wherein the group control means (120) comprises a group manager (20) arranged to define a service group, to send group invitations to nodes, and to register a group member based on a group registration request received from a node (10, 20-22).

24. Apparatus according to claim 23, wherein the group manager (20) comprises group monitoring means arranged to monitor the accessibility of group members (21) by sending group monitoring requests to group members (21) and by monitoring the responses from the group members (21).

25. Apparatus according to claim 23 or 24, wherein the group manager (20) comprises group member searching means arranged to send search requests for a missing group member (21) to accessible nodes (10, 20-22).

26. Apparatus according to claim 22, wherein the group control means (120) comprises group invitation detection means for detecting a group invitation, wherein the group control means (120) are adapted to send a group registration request to the group manager (20) after a group invitation has been received.

27. Apparatus according to at least one of claims 22 to 26, wherein the group control means (120) comprises group monitoring detection means for detecting group monitoring requests and search requests, wherein the group control means (120) are adapted to send a response to the group manager (20) after a group monitoring request or a search request has been received.

28. Apparatus according to any of claims 22 to 27, wherein the communication network (1) is arranged as a mobile ad-hoc network, where a node (10, 20-22) is adapted to communicate with other nodes (10, 20-22) in a direct manner or in an indirect manner via intermediate relaying nodes (22).

29. Apparatus according to any of claims 22 to 28, comprising any network interface, in particular based on short range radio access technology, to communicate with nodes (10, 20-22) in the communication network (1).

30. Apparatus according to claim 29, wherein the network interface is adapted to broadcast data to a plurality of nodes (10, 20-22) and/or to multicast data to a determined group of nodes, in particular by using an Internet Protocol group address.

31. Apparatus according to at least one of claims 22 to 30, comprising a plurality of network interfaces to communicate using different communication networks (1), wherein the group member searching means are adapted to send search requests for a missing group member (21) via different network interfaces.

32. Apparatus according to any of claims 22 to 31, wherein the session control means (130) comprises a session manager arranged to define a session for a service, to send session invitations to group members (21), and to register a session member based on a session participation request received from a node (10, 20-22).

33. Apparatus according to claim 32, wherein the session manager comprises session monitoring means arranged to monitor the status of a session by sending session monitoring probes to session members and by monitoring the responses from the session members.

34. Apparatus according to at least one of claims 22 to 33, wherein the session control means (130) comprises a session monitoring detection means for detecting session monitoring probes, and wherein the session control means (130) are adapted to send a session monitoring response to the session manager after a session monitoring probe has been received.

35. Apparatus according to any of claims 22 to 34, wherein the nodes (10, 20-22) in the communication network (1) are mobile nodes, in particular mobile phones, personal digital assistants (PDA), wireless LAN nodes such as notebooks, access points or workstations, which communicate by means of wireless communication links, or devices having a short range radio access network interface, in particular sensor chips or RFID chips.

36. Computer program product directly loadable into the internal memory of a digital computer, comprising software code portions for performing the steps of any of claims 1 to 21 when said product is run on the computer.

37. Computer program product stored on a computer usable medium, comprising computer readable program means for causing a computer to perform the steps of any of claims 1 to 21 when said product is run on the computer.

## Patentansprüche

1. Verfahren zum Betreiben von Gruppendiensten in einem mobilen Ad-hoc-Netzwerk (1), das eine Vielzahl von Netzwerkknoten (10, 20 - 22) aufweist, wobei das Verfahren aufweist:
Durchführen eines Gruppensteuerungsprozesses (120) durch einen Gruppenmanagerknoten (20) der Netzwerkknoten (10, 20 - 22), um die Mitgliedschaft von Netzwerkknoten (10, 20 - 22) in einer Dienstgruppe, die aus einem Teilsatz der Netzwerkknoten (10, 20 - 22) in dem Kommunikationsnetz (1) besteht, zu steuern;
Durchführen eines Sitzungssteuerungsprozesses (130), um einen Verbindungsstatus einer Sitzung zum Vorsehen einer Kommunikationsverbindung zwischen Mitgliederknoten (21) der Dienstgruppe zu steuern, um so eine Kommunikation einer Anwendung zu ermöglichen, die auf den Mitgliederknoten (21) der Dienstgruppe arbeitet;
Durchführen des Sitzungssteuerungsprozesses (130) durch einen Sitzungsmanagerknoten, der nicht der Gruppenmanagerknoten (20) ist, und getrennt von dem Gruppensteuerungsprozess (120), und
Konfigurieren des Sitzungssteuerungsprozesses (130), um den Verbindungsstatus jeder einer Vielzahl von Sitzungen in der Dienstgruppe unabhängig zu steuern, wobei
der Gruppensteuerungsprozess (120) ein Überwachen von Gruppenmitgliedern (21) aufweist durch Senden von Gruppenüberwachungsanforderungen an Gruppenmitglieder (21) und durch Überwachen der Antworten von den Gruppenmitgliedern (21).

2. Verfahren gemäß Anspruch 1, wobei die Gruppensteuerung (120) ein Definieren einer Dienstgruppe durch einen Gruppenmanager (20) basierend auf Gruppenattributen aufweist, insbesondere einem Gruppennamen, einem Gruppenidentifizierer, einem Gruppenmanageridentifizierer und/oder Gruppenmitgliederidentifizierer.

3. Verfahren gemäß Anspruch 1, wobei die Gruppensteuerung (120) ein Erfassen einer existierenden Dienstgruppe mit erforderlichen Gruppenattributen aufweist.

4. Verfahren gemäß Anspruch 1 oder 2, wobei die Gruppensteuerung (120) ein Senden einer Gruppeneinladung an Knoten durch den Gruppenmanager (20) aufweist.

5. Verfahren gemäß einem der Ansprüche 1 bis 4, wobei die Gruppensteuerung (120) ein Erfassen einer von einem Gruppenmanager (20) empfangenen Gruppeneinladung und/oder ein Senden einer Gruppenregistrierungsanforderung an den Gruppenmanager (20) aufweist.

6. Verfahren gemäß einem der Ansprüche 1 bis 5, wobei die Gruppensteuerung (120) ein Registrieren eines Gruppenmitglieds basierend auf einer Gruppenregistrierungsanforderung aufweist, die von einem Knoten (10, 20 - 22) empfangen wird.

7. Verfahren gemäß einem der Ansprüche 1 bis 6, wobei die Gruppensteuerung (120) ein Erzeugen eines Gruppenzertifikats aufweist, wobei das Gruppenzertifikat in der Kommunikation zwischen dem Gruppenmanager (20) und den Gruppenmitgliedern (21) verwendet wird, um die Dienstgruppe zu identifizieren.

8. Verfahren gemäß einem der Ansprüche 1 bis 7, wobei die Gruppensteuerung (120) ein Erzeugen einer Gruppensteuerungsinformation durch den Gruppenmanager (20) und ein Senden der Gruppensteuerungsinformation an die Gruppenmitglieder (21) aufweist, wobei die Gruppensteuerungsinformation Gruppenattribute umfasst.

9. Verfahren gemäß einem der Ansprüche 1 bis 8, wobei der Gruppenmanager (20) Gruppenbestätigungsanforderungen an Gruppenmitglieder (21) sendet; wobei die Gruppenmitglieder (21) auf empfangene Gruppenbestätigungsanforderungen antworten durch Senden von Gruppenbestätigungsantworten an den Gruppenmanager (20); und wobei der Gruppenmanager (20) die Registrierung von Gruppenmitgliedern (21) abhängig von empfangenen Gruppenbestätigungsantworten aktiviert.

10. Verfahren gemäß Anspruch 9, wobei das Überwachen von Gruppenmitgliedern (21) aufweist ein periodisches Senden mehrerer Gruppenüberwachungsanforderungen an einzelne Gruppenmitglieder (21) und ein Bewerten eines Gruppenmitglieds (21) als ein fehlendes Gruppenmitglied, wenn von dem Gruppenmitglied (21) für eine vorgegebene Anzahl von Gruppenüberwachungsanforderungen keine Antwort empfangen wurde.

11. Verfahren gemäß Anspruch 9, wobei der Gruppenmanager (20) eine Gruppenüberwachungsanforderung durch ein Multicast-Verfahren an alle Gruppenmitglieder (21) sendet und die Gruppenmitglieder (21) Gruppenüberwachungsantworten auf die empfangenen Gruppenüberwachungsanforderungen an den Gruppenmanager (20) senden, wobei die Gruppenüberwachungsantworten basierend auf einer zufälligen Verzögerung nach dem Empfang der Gruppenüberwachungsanforderungen gesendet werden.

12. Verfahren gemäß einem der Ansprüche 9 bis 11, wobei die Überwachung von Gruppenmitgliedern (21) ein Suchen eines fehlenden Gruppenmitglieds (21) durch Senden einer Suchanforderung für das fehlende Gruppenmitglied (21) an erreichbare Knoten (10, 20 - 22) aufweist.

13. Verfahren gemäß Anspruch 12, wobei eine Suchanforderung mit einem Lebenszeit-Parameter an alle erreichbaren Knoten (10, 20 - 22) als Broadcast gesendet wird.

14. Verfahren gemäß Anspruch 12 oder 13, wobei, wenn von einem fehlenden Gruppenmitglied (21) in einer vorgegebenen Zeitdauer keine Antwort empfangen wird, periodisch weitere Suchanforderungen gesendet werden, wobei die Lebenszeiten aufeinander folgender Suchanforderungen erhöht werden.

15. Verfahren gemäß Anspruch 12 bis 14, wobei die Suche nach einem fehlenden Gruppenmitglied (21) unter Verwendung mehrerer Kommunikationsnetzwerke (1) durchgeführt wird.

16. Verfahren gemäß einem der Ansprüche 12 bis 15, wobei ein fehlendes Gruppenmitglied (21) als ein verlorenes Gruppenmitglied (21) bewertet wird, wenn auf eine oder mehrere Suchanforderungen für das Gruppenmitglied (21) keine Antwort empfangen wird.

17. Verfahren gemäß Anspruch 16, wobei die folgenden Schritte durchgeführt werden, wenn ein verlorenes Gruppenmitglied (21) festgestellt wird:
Aktualisieren der Gruppensteuerungsinformation, und
Benachrichtigen der verbleibenden Gruppenmitglieder (21) über die aktualisierte Gruppensteuerungsinformation.

18. Verfahren gemäß einem der Ansprüche 1 bis 17, das aufweist:
Senden von Wiederanschlussanforderungen an den Gruppenmanager (20), wenn ein Gruppenmitglied (21) eine Überwachungsanforderung oder eine Suchanforderung von dem Gruppenmanager (20) empfängt, nachdem es für eine vorgegebene Zeitdauer keine Anforderung empfangen hat.

19. Verfahren gemäß Anspruch 18, wobei der Gruppenmanager (20) die folgenden Schritte durchführt:
Empfangen einer Wiederanschlussanforderung von einem verlorenen Gruppenmitglied (21),
Aktualisieren der Gruppensteuerungsinformation, und
Benachrichtigen der Gruppenmitglieder (21) über die aktualisierte Gruppensteuerungsinformation.

20. Verfahren gemäß einem der Ansprüche 1 bis 19, wobei ein Gruppenmitglied (21) eine Gruppe-verlassen-Anforderung an den Gruppenmanager (20) sendet; der Gruppenmanager (20) die Gruppensteuerungsinformation aktualisiert und die Gruppenmitglieder (21) über die aktualisierte Gruppensteuerungsinformation benachrichtigt.

21. Verfahren gemäß einem der Ansprüche 1 bis 20, wobei ein Sitzungsmitglied eine Sitzung-verlassen-Anforderung an den Sitzungsmanager sendet; der der Sitzungsmanager die Sitzungssteuerungsinformation aktualisiert und die Sitzungsmitglieder über die aktualisierte Sitzungssteuerungsinformation benachrichtigt.

22. Vorrichtung zum Betreiben von Gruppendiensten in einem mobilen Ad-hoc-Netzwerk (1), das eine Vielzahl von Netzwerkknoten (10, 20 - 22) aufweist, wobei die Vorrichtung aufweist:
Gruppensteuerungsmittel (120), um die Mitgliedschaft von Netzwerkknoten (10, 20 - 22) in einer Dienstgruppe, die aus einem Teilsatz der Netzwerkknoten (10, 20 - 22) in dem Kommunikationsnetz (1) besteht, zu steuern, wobei das Gruppensteuerungsmittel (120) in einem Gruppenmanagerknoten (20) ausgebildet ist; und
Sitzungssteuerungsmittel (130), um einen Verbindungsstatus einer Sitzung zum Vorsehen einer Kommunikationsverbindung zwischen Mitgliederknoten (21) der Dienstgruppe zu steuern, um so eine Kommunikation einer Anwendung zu ermöglichen, die auf den Mitgliederknoten (21) der Dienstgruppe arbeitet, wobei die Sitzungssteuerungsmittel (130) in einem Sitzungsmanagerknoten ausgebildet sind, der nicht der Gruppenmanagerknoten (20) ist, und getrennt von dem Gruppensteuerungsmitteln (120) arbeiten, und
die Sitzungssteuerungsmittel (130) konfiguriert sind, um den Verbindungsstatus jeder einer Vielzahl von Sitzungen in der Dienstgruppe unabhängig zu steuern, wobei
das Gruppenmittel (120) Gruppenmitglieder (21) überwacht durch Senden von Gruppenüberwachungsanforderungen an Gruppenmitglieder (21) und durch Überwachen der Antworten von den Gruppenmitgliedern (21).

23. Vorrichtung gemäß Anspruch 22, wobei das Gruppensteuerungsmittel (120) einen Gruppenmanager (20) aufweist, der ausgebildet ist, eine Dienstgruppe zu definieren, Gruppeneinladungen an Knoten zu senden und ein Gruppenmitglied basierend auf einer von einem Knoten (10, 20 - 22) empfangenen Gruppenregistrierungsanforderung zu registrieren.

24. Vorrichtung gemäß Anspruch 23, wobei der Gruppenmanager (20) Gruppenüberwachungsmittel aufweist, die ausgebildet sind, die Erreichbarkeit von Gruppenmitgliedern (21) zu überwachen durch Senden von Gruppenüberwachungsanforderungen an Gruppenmitglieder (21) und durch Überwachen der Antworten von den Gruppenmitgliedern (21).

25. Vorrichtung gemäß Anspruch 23 oder 24, wobei der Gruppenmanager (20) Gruppenmitgliedersuchmittel aufweist, die ausgebildet sind, Suchanforderungen für ein fehlendes Gruppenmitglied (21) an erreichbare Knoten (10, 20 - 22) zu senden.

26. Vorrichtung gemäß Anspruch 22, wobei die Gruppensteuerungsmittel (120) Gruppeneinladungserfassungsmittel aufweisen zur Erfassung einer Gruppeneinladung, wobei die Gruppensteuerungsmittel (120) ausgebildet sind, eine Gruppenregistrierungsanforderung an den Gruppenmanager (20) zu senden, nachdem eine Gruppeneinladung empfangen wurde.

27. Vorrichtung gemäß zumindest einem der Ansprüche 22 bis 26, wobei die Gruppensteuerungsmittel (120) Gruppenüberwachungserfassungsmittel aufweisen zum Erfassen von Gruppenüberwachungsanforderungen und Suchanforderungen, wobei die die Gruppensteuerungsmittel (120) ausgebildet sind, eine Antwort an den Gruppenmanager (20) zu senden, nachdem eine Gruppenüberwachungsanforderung oder eine Suchanforderung empfangen wurde.

28. Vorrichtung gemäß zumindest einem der Ansprüche 22 bis 27, wobei das Kommunikationsnetzwerk (1) als ein mobiles Ad-hoc-Netzwerk ausgebildet ist, wobei ein Knoten (10, 20 - 22) ausgebildet ist, mit anderen Knoten (10, 20 - 22) auf eine direkte Weise oder auf eine indirekte Weise über dazwischenliegende Weiterleitungsknoten (22) zu kommunizieren.

29. Vorrichtung gemäß zumindest einem der Ansprüche 22 bis 28, das eine Netzwerkschnittestelle aufweist, insbesondere basierend auf Nahbereichsfunkzugangs-Technologie, um mit den Knoten (10, 20 - 22) in dem Kommunikationsnetzwerk (1) zu kommunizieren.

30. Vorrichtung gemäß Anspruch 29, wobei die Netzwerkschnittstelle ausgebildet ist, Daten an eine Vielzahl von Knoten (10, 20 - 22) als Broadcast zu senden und/oder Daten an eine bestimmte Gruppe von Knoten per Multicast zu senden, insbesondere unter Verwendung einer Internetprotokoll-Gruppenadresse.

31. Vorrichtung gemäß zumindest einem der Ansprüche 22 bis 30, die eine Vielzahl von Netzwerkschnittstellen aufweist, um unter Verwendung unterschiedlicher Kommunikationsnetzwerke (1) zu kommunizieren, wobei die Gruppenmitgliedersuchmittel ausgebildet sind, Suchanforderungen für ein fehlendes Gruppenmitglied (21) über unterschiedliche Netzwerkschnittstellen zu senden.

32. Vorrichtung gemäß zumindest einem der Ansprüche 22 bis 31, wobei die Sitzungssteuerungsmittel (130) einen Sitzungsmanager aufweisen, der ausgebildet ist, eine Sitzung für einen Dienst zu definieren, Sitzungseinladungen an Gruppenmitglieder (21) zu senden und ein Sitzungsmitglied basierend auf einer von einem Knoten (10, 20 - 22) empfangenen Sitzungsteilnahmeanforderung zu registrieren.

33. Vorrichtung gemäß Anspruch 32, wobei der Sitzungsmanager Sitzungsüberwachungsmittel aufweist, die ausgebildet sind, den Status einer Sitzung zu überwachen durch Senden von Sitzungsüberwachungstests an Sitzungsmitglieder und durch Überwachen der Antworten von den Sitzungsmitgliedern.

34. Vorrichtung gemäß zumindest einem der Ansprüche 22 bis 33, wobei die Sitzungssteuerungsmittel (130) ein Sitzungsüberwachungserfassungsmittel aufweisen zur Erfassung von Sitzungsüberwachungstests, und wobei die Sitzungssteuerungsmittel (130) ausgebildet sind, eine Sitzungsüberwachungsantwort an den Sitzungsmanager zu senden, nachdem ein Sitzungsüberwachungstest empfangen wurde.

35. Vorrichtung gemäß zumindest einem der Ansprüche 22 bis 34, wobei die Knoten (10, 20 - 22) in dem Kommunikationsnetzwerk (1) mobile Knoten sind, insbesondere mobile Telefone, PDAs (personal digital assistants), drahtlose LAN-Knoten, wie Notebooks, Zugangspunkte oder Workstations, die mittels drahtloser Kommunikationsverbindungen kommunizieren, oder Vorrichtungen mit einer Nahbereichsfunkzugriffsnetzwerkschnittstelle, insbesondere Sensor-Chips oder RFID-Chips.

36. Computerprogrammprodukt, das direkt in den internen Speicher eines digitalen Computers geladen werden kann, das Softwarecodeabschnitte zur Durchführung der Schritte gemäß einem der Ansprüchen 1 bis 21 aufweist, wenn dieses Produkt auf dem Computer läuft.

37. Computerprogrammprodukt, das auf einem Computerbenutzbaren Medium gespeichert ist, das Computer-lesbare Programmmittel aufweist, um den Computer zu veranlassen, die Schritte gemäß einem der Ansprüche 1 bis 21, wenn dieses Produkt auf dem Computer läuft.

## Revendications

1. Procédé pour faire fonctionner des services collectifs dans un réseau mobile ad hoc (1) comprenant une pluralité de noeuds de réseau (10, 20-22), le procédé comprenant :
l'exécution d'un processus de contrôle de groupe (120) par un noeud gestionnaire de groupe (20) des noeuds de réseaux (10, 20-22) pour contrôler l'appartenance des noeuds de réseau (10, 20-22) à un groupe de service se composant d'un sous-ensemble des noeuds de réseau (10, 20-22) dans le réseau de communication (1) ;
l'exécution d'un processus de contrôle de session (130) pour contrôler un état de connexion d'une session afin de fournir une connexion de communication entre les noeuds membres (21) du groupe de services pour permettre une communication d'une application fonctionnant sur les noeuds membres du groupe de services (21),
l'exécution du processus de contrôle de session (130) par un noeud gestionnaire de session autre que le noeud gestionnaire de groupe (20) et séparément du processus de contrôle de groupe (120), et
la configuration du processus de contrôle de session (130) pour contrôler indépendamment l'état de connexion de chacune des une pluralité de sessions à l'intérieur du groupe de services, dans lequel
le processus de contrôle de groupe (120) comprend le suivi des membres du groupe (21) en envoyant des demandes de suivi du groupe aux membres du groupe (21) et en effectuant le suivi des réponses des membres du groupe (21).

2. Procédé selon la revendication 1, dans lequel le contrôle de groupe (120) comprend la définition d'un groupe de services par un gestionnaire de groupe (20) sur la base d'attributs de groupe, notamment un nom de groupe, un identifiant de groupe, un identifiant de gestionnaire de groupe et/ou des identifiants de membres du groupe.

3. Procédé selon la revendication 1, dans lequel le contrôle de groupe (120) comprend la détection d'un groupe de services existant ayant les attributs de groupe requis.

4. Procédé selon la revendication 1 ou 2, dans lequel le contrôle de groupe (120) comprend l'envoi d'une invitation de groupe aux noeuds par le gestionnaire de groupe (20).

5. Procédé selon l'une quelconque des revendications 1 à 4, dans lequel le contrôle de groupe (120) comprend la découverte d'une invitation de groupe reçue de la part d'un gestionnaire de groupe (20) et/ou l'envoi d'une demande d'enregistrement à un groupe au gestionnaire de groupe (20).

6. Procédé selon l'une quelconque des revendications 1 à 5, dans lequel le contrôle de groupe (120) comprend l'enregistrement d'un membre de groupe sur la base d'une demande d'enregistrement à un groupe reçue d'un noeud (10, 20-22).

7. Procédé selon l'une quelconque des revendications 1 à 6, dans lequel le contrôle de groupe (120) comprend la production d'un certificat de groupe, dans lequel le certificat de groupe est utilisé dans la communication entre le gestionnaire de groupe (20) et les membres du groupe (21) pour identifier le groupe de services.

8. Procédé selon l'une quelconque des revendications 1 à 7, dans lequel le contrôle de groupe (120) comprend la production d'informations de contrôle de groupe par le gestionnaire de groupe (20) et l'envoi d'informations de contrôle de groupe aux membres du groupe (21), dans lequel les informations de contrôle de groupe incluent les attributs du groupe.

9. Procédé selon l'une quelconque des revendications 1 à 8, dans lequel le gestionnaire de groupe (20) envoie des demandes de confirmation de groupe aux membres du groupe (21) ; les membres du groupe (21) répondent aux demandes de confirmation de groupe reçues en envoyant des réponses de confirmation de groupe au gestionnaire de groupe (20) ; et le gestionnaire de groupe (20) active l'enregistrement des membres du groupe (21) selon les réponses de confirmation de groupe reçues.

10. Procédé selon la revendication 9, dans lequel le suivi des membres du groupe (21) comprend l'envoi périodique de demandes de suivi de groupe multiples aux membres du groupe individuels (21) et un jugement concluant qu'un membre du groupe (21) est un membre du groupe manquant si aucune réponse n'a été reçue du membre du groupe (21) pour un nombre prédéterminé de demandes de suivi de groupe.

11. Procédé selon la revendication 9, dans lequel le gestionnaire de groupe (20) envoie une demande de suivi de groupe à tous les membres du groupe (21) par multidiffusion et les membres du groupe (21) envoient au gestionnaire de groupe (20) des réponses de suivi de groupe aux demandes de suivi de groupe reçues, dans lequel les réponses de suivi de groupe sont envoyées sur la base d'un délai aléatoire après la réception des demandes de suivi de groupe.

12. Procédé selon l'une quelconque des revendications 9 à 11, dans lequel le suivi des membres du groupe (21) comprend la recherche d'un membre du groupe manquant (21) en envoyant une demande de recherche du membre du groupe manquant (21) aux noeuds accessibles (10, 20-22).

13. Procédé selon la revendication 12, dans lequel une demande de recherche ayant un paramètre de durée de vie est diffusée à tous les noeuds accessibles (10, 20-22).

14. Procédé selon la revendication 12 ou 13, dans lequel, si aucune réponse d'un membre du groupe manquant (21) n'est reçue dans une période de temps prédéterminée, d'autres demandes de recherche sont envoyées périodiquement, dans lequel les durées de vie des demandes de recherche successives sont augmentées.

15. Procédé selon les revendications 12 à 14, dans lequel la recherche d'un membre du groupe manquant (21) est effectuée en utilisant des réseaux de communication multiples (1).

16. Procédé selon l'une quelconque des revendications 12 à 15, dans lequel un membre du groupe manquant (21) est jugé être un membre du groupe perdu (21) si aucune réponse à une ou plusieurs demandes de recherche du membre du groupe (21) n'a été reçue.

17. Procédé selon la revendication 16, dans lequel les étapes suivantes sont effectuées, si un membre du groupe perdu (21) est déterminé :
mise à jour des informations de contrôle de groupe, et
notification aux membres du groupe restants (21) des informations de contrôle de groupe mises à jour.

18. Procédé selon l'une quelconque des revendications 1 à 17, comprenant :
l'envoi de demandes de réintégration au gestionnaire de groupe (20), si un membre du groupe (21) reçoit une demande de suivi ou une demande de recherche de la part du gestionnaire de groupe (20) après n'avoir pas reçu de demande pendant une période de temps prédéterminée.

19. Procédé selon la revendication 18, dans lequel le gestionnaire de groupe (20) effectue les étapes suivantes :
réception d'une demande de réintégration de la part d'un membre du groupe perdu (21),
mise à jour des informations de contrôle de groupe, et
notification aux membres du groupe (21) des informations de contrôle de groupe mises à jour.

20. Procédé selon l'une quelconque des revendications 1 à 19, dans lequel un membre du groupe (21) envoie au gestionnaire de groupe (20) une demande pour quitter le groupe ; le gestionnaire de groupe (20) met à jour les informations de contrôle de groupe et notifie aux membres du groupe (21) les informations de contrôle de groupe mises à jour.

21. Procédé selon l'une quelconque des revendications 1 à 20, dans lequel un membre d'une session envoie au gestionnaire de session une demande pour quitter la session ; le gestionnaire de session met à jour les informations de contrôle de session et notifie aux membres de la session les informations de contrôle de session mises à jour.

22. Dispositif pour faire fonctionner des services collectifs dans un réseau mobile ad hoc (1) comprenant une pluralité de noeuds de réseau (10, 20-22), le dispositif comprenant :
un moyen de contrôle de groupe (120) pour commander l'appartenance des noeuds de réseau (10, 20-22) à un groupe de services se composant d'un sous-ensemble des noeuds de réseau (10, 20-22) dans le réseau de communication (1), le moyen de contrôle de groupe (120) étant disposé dans un noeud gestionnaire de groupe (20) ; et
un moyen de contrôle de session (130) pour commander un état de connexion d'une session afin de fournir une connexion de communication entre les noeuds membres (21) du groupe de services pour permettre une communication d'une application fonctionnant sur les noeuds membres du groupe de services (21), dans lequel
le moyen de contrôle de session (130) est disposé dans un noeud gestionnaire de session autre que le noeud gestionnaire de groupe (20) et fonctionne séparément du moyen de contrôle de groupe (120), et
le moyen de contrôle de session (130) est configuré pour commander indépendamment l'état de connexion de chacune des multiples sessions à l'intérieur du groupe de services, dans lequel le moyen de contrôle de groupe (120) effectue le suivi des membres du groupe (21) en envoyant des demande de suivi de groupe aux membres du groupe (21) et en effectuant le suivi des réponses des membres du groupe (21).

23. Dispositif selon la revendication 22, dans lequel le moyen de contrôle de groupe (120) comprend un gestionnaire de groupe (20) fourni pour définir un groupe de services, pour envoyer des invitations de groupe aux noeuds et pour enregistrer un membre du groupe sur la base d'une demande d'enregistrement à un groupe reçue d'un noeud (10, 20-22).

24. Dispositif selon la revendication 23, dans lequel le gestionnaire de groupe (20) comprend un moyen de suivi de groupe fourni pour effectuer le suivi de l'accessibilité des membres du groupe (21) en envoyant des demandes de suivi de groupe aux membres du groupe (21) et en effectuant le suivi des réponses des membres du groupe (21).

25. Dispositif selon la revendication 23 ou 24, dans lequel le gestionnaire de groupe (20) comprend un moyen de recherche de membre du groupe fourni pour envoyer des demandes de recherche d'un membre du groupe manquant (21) aux noeuds accessibles (10, 20-22).

26. Dispositif selon la revendication 22, dans lequel le moyen de contrôle de groupe (120) comprend un moyen de détection d'invitation de groupe pour détecter une invitation de groupe, dans lequel le moyen de contrôle de groupe (120) est adapté pour envoyer au gestionnaire de groupe (20) une demande d'enregistrement à un groupe après la réception d'une invitation de groupe.

27. Dispositif selon au moins l'une des revendications 22 à 26, dans lequel le moyen de contrôle de groupe (120) comprend un moyen de détection de suivi de groupe pour détecter des demandes de suivi de groupe et des demandes de recherche, dans lequel le moyen de contrôle de groupe (120) est adapté pour envoyer une réponse au gestionnaire de groupe (20) après qu'une demande de suivi de groupe ou une demande de recherche a été reçue.

28. Dispositif selon l'une quelconque des revendications 22 à 27, dans lequel le réseau de communication (1) est fourni sous la forme d'un réseau mobile ad hoc, dans lequel un noeud (10, 20-22) est adapté pour communiquer avec les autres noeuds (10, 20-22) d'une manière directe ou d'une manière indirecte au moyen de noeuds de relais intermédiaires.

29. Dispositif selon l'une quelconque des revendications 22 à 28, comprenant une interface de réseau quelconque, basée en particulier sur une technologie d'accès radio à courte distance, pour communiquer avec les noeuds (10, 20-22) dans le réseau de communication (1).

30. Dispositif selon la revendication 29, dans lequel l'interface de réseau est adaptée pour diffuser des données à une pluralité de noeuds (10, 20-22) et/ou pour multidiffuser des données à un groupe de noeuds déterminé, notamment en utilisant une adresse de groupe de Protocole Internet.

31. Dispositif selon au moins l'une des revendications 22 à 30, comprenant une pluralité d'interfaces de réseau pour communiquer en utilisant différents réseaux de communication (1), dans lequel le moyen de recherche de membre du groupe est adapté pour envoyer des demandes de recherche d'un membre du groupe manquant (21) via différentes interfaces de réseau.

32. Dispositif selon l'une quelconque des revendications 22 à 31, dans lequel le moyen de contrôle de session (130) comprend un gestionnaire de session fourni pour définir une session pour un service, pour envoyer des invitations de session aux membres du groupe (21) et pour enregistrer un membre de session sur la base d'une demande de participation à une session reçue d'un noeud (10, 20-22).

33. Dispositif selon la revendication 32, dans lequel le gestionnaire de session comprend un moyen de suivi de session fourni pour effectuer le suivi de l'état d'une session en envoyant des enquêtes de suivi de session à des membres de la session et en effectuant le suivi des réponses des membres de la session.

34. Dispositif selon au moins l'une des revendications 22 à 33, dans lequel le moyen de contrôle de session (130) comprend un moyen de détection de suivi de session pour détecter des enquêtes de suivi de session et dans lequel le moyen de contrôle de session (130) est adapté pour envoyer une réponse de suivi de session au gestionnaire de session après qu'une enquête de suivi de session a été reçue.

35. Dispositif selon l'une quelconque des revendications 22 à 34, dans lequel les noeuds (10, 20-22) dans le réseau de communication (1) sont des noeuds mobiles, notamment des téléphones mobiles, des assistants numériques personnels (ANP), des noeuds LAN sans fil tels que des ordinateurs portables, des points d'accès ou des postes de travail, qui communiquent au moyen de liaisons de communication sans fil, ou des dispositifs possédant une interface de réseau d'accès radio à courte distance, notamment des puces de détecteur ou des puces d'identification par radiofréquence (RFID).

36. Un produit de programme d'ordinateur directement chargeable dans la mémoire interne d'un ordinateur numérique, comprenant des parties de codes de logiciel pour effectuer les étapes de l'une quelconque des revendications 1 à 21 quand ledit produit est exécuté sur l'ordinateur.

37. Un produit de programme d'ordinateur stocké sur un support utilisable par ordinateur, comprenant un programme lisible par ordinateur pour faire effectuer à un ordinateur les étapes de l'une quelconque des revendications 1 à 21 quand ledit produit est exécuté sur un ordinateur.
